# EUROPEAN PATENT APPLICATION

(11) **EP 4 651 544 A1**
(43) Date of publication of application: **19.11.2025**
(21) Application number: 24741324.8
(22) Date of filing: 11.01.2024
(51) Int. Cl.: H04W 24/02

(54) **METHOD AND DEVICE FOR DETERMINING NUMBER OF TIMES OF DTX, AND TERMINAL**

(30) Priority: 12.01.2023 CN 202310040408
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2024/071797
(87) International publication number: WO 2024/149328

(57) **Abstract**

A method and an apparatus for determining a number of DTXs, and a terminal are provided. The method executed by a first terminal includes: performing statistics on a number of consecutive discontinuous transmissions (DTXs) for a sidelink interface based on one set of physical sidelink feedback channel (PSFCH) reception occasions, wherein the one set of PSFCH reception occasions comprises at least two PSFCH reception occasions.

## Description

### CROSS-REFERENCE TO RELATED APPLICATION

The present disclosure claims a priority of Chinese Patent Application No. 202310040408.0 entitled "METHOD AND APPARATUS FOR DETERMINING NUMBER OF DTXS, AND TERMINAL" filed on January 12, 2023, the entire contents of which are hereby incorporated by reference in their entirety.

### TECHNICAL FIELD

The present disclosure relates to the technical field of communications, and in particular to a method and an apparatus for determining a number of DTXs, and a terminal.

### BACKGROUND

For sidelink in unlicensed (Sidelink in Unlicensed, SL-U) spectrum, with the introduction of listen before talk (Listen Before Talk, LBT) mechanism, a transmission of a physical sidelink feedback channel (Physical Sidelink Feedback Channel, PSFCH) may be unable to be transmitted due to LBT failure, and the failure probability of the transmission of the PSFCH greatly increases. In this case, if the statistical method for consecutive discontinuous transmission (Discontinuous Transmission, DTX) frequency in the authorized spectrum in the related technologies is used, it will lead to frequent occurrence of sidelink (Sidelink, SL) radio link failure (Radio Link Failure, RLF) at the terminal, seriously affecting service continuity and user experience.

### SUMMARY

Embodiments of the present disclosure provide a method and an apparatus for determining a number of DTXs, and terminal, to solve the problem that the SL RLF frequently occurs to the terminal in the SL-U spectrum.

In order to solve the above technical problem, an embodiment of the present disclosure provides a method for determining a number of DTXs, executed by a first terminal, including:
performing statistics on a number of consecutive discontinuous transmissions (DTXs) for a sidelink interface based on one set of physical sidelink feedback channel (PSFCH) reception occasions, where the one set of PSFCH reception occasions includes at least two PSFCH reception occasions.

Optionally, the performing statistics on the number of the consecutive discontinuous transmissions (DTXs) for the sidelink interface based on the one set of physical sidelink feedback channel (PSFCH) reception occasions includes:
increasing a statistical value of the number of the consecutive DTXs by one, in a case that no PSFCH is received in any PSFCH reception occasion in the one set of PSFCH reception occasions; or
resetting a statistical value of the number of the consecutive DTXs to zero, in a case that a PSFCH is received in at least one PSFCH reception occasion in the one set of PSFCH reception occasions.

Optionally, the method further includes: determining a resource location of each PSFCH reception occasion in the one set of PSFCH reception occasions based on a first manner, where the resource location includes: a time-domain location and/or a frequency-domain location; where the first manner includes at least one of the following:
determining based on implementation by the first terminal;
determining based on protocol agreement;
determining based on preconfigured information;
determining based on a broadcast signaling or a dedicated signaling transmitted by a network device to which the first terminal belongs;
determining based on indication information transmitted by a network device to which the first terminal belongs;
determining based on a resource location of first information, and an association relationship between the resource location of the first information and a resource location of each PSFCH reception occasion in one set of PSFCH reception occasions corresponding to the first information; or
determining a resource location of first information, an association relationship between the resource location of the first information and a resource location of a first PSFCH reception occasion in one set of PSFCH reception occasions corresponding to the first information, and an association relationship between resource locations of different PSFCH reception occasions in the one set of PSFCH reception occasions,
where the first information includes a physical sidelink shared channel (PSSCH) and/or a physical sidelink control channel (PSCCH).

Optionally, the method further includes: transmitting one set of PSFCH reception occasions corresponding to a PSSCH and/or a PSCCH to a second terminal through a first signaling, where the first signaling includes at least one of the following:
sidelink control information (SCI);
a sidelink media access control control element (MAC CE); or
a PC5 radio resource control (RRC) signaling.

Optionally, the first signaling is used to indicate at least one of the following:
a resource location of each PSFCH reception occasion in the one set of PSFCH reception occasions;
a resource location of a first PSFCH reception occasion in the one set of PSFCH reception occasions;
an association relationship between resource locations of different PSFCH receiving mechanisms in the one set of PSFCH reception occasions;
an association relationship between a resource location of first information and a resource location of each PSFCH reception occasion in one set of PSFCH reception occasions corresponding to the first information;
an association relationship between a resource location of first information and a resource location of a first PSFCH reception occasion of PSFCH reception occasions in one set of PSFCH reception occasions corresponding to the first information,
where the first information includes a PSSCH and/or a PSCCH.

Optionally, in a case that the first signaling includes at least two of the SCI, the sidelink MAC CE, and the PC5 RRC signaling, dynamically varying information in resource location information of the one set of PSFCH reception occasions is transmitted by using the SCI, and semi-statically varying information or fixed information in the resource location information of the one set of PSFCH reception occasions is transmitted by using the sidelink MAC CE or the PC5 RRC signaling.

Optionally, in a case that the first signaling includes the sidelink MAC CE or the PC5 RRC signaling, the method further includes: encapsulating the first signaling and the PSSCH into one media access control protocol data unit (MAC PDU) for transmission.

Optionally, the method further includes: determining whether a PSCCH and/or a PSSCH of the first terminal corresponds to one PSFCH reception occasion or one set of PSFCH reception occasions based on a second manner, where the second manner includes at least one of the following:
determining based on implementation by the first terminal;
determining based on preconfigured information; or
determining based on a broadcast signaling or a dedicated signaling transmitted by a network device to which a first terminal belongs.

Optionally, the method further includes: transmitting first indication to a second terminal through sidelink interface control information, where the first indication is used to indicate:
a PSCCH and/or a PSSCH corresponding to one PSFCH reception occasion; or
a PSCCH and/or a PSSCH corresponding to one set of PSFCH reception occasions.

Optionally, the method further includes: in a case that at least one PSFCH feedback is received in the one set of PSFCH reception occasions, if the at least one PSFCH feedback is an acknowledgement (ACK), determining the PSFCH feedback as the ACK; and if the at least one PSFCH feedback is a non-acknowledgement (NACK), determining the PSFCH feedback as the NACK.

An embodiment of the present disclosure further provides a method for determining a number of DTXs, executed by a second terminal, including:
performing statistics on a number of consecutive discontinuous transmissions (DTXs) for a sidelink interface based on one set of physical sidelink feedback channel (PSFCH) reception occasions, where the one set of PSFCH reception occasions includes at least two PSFCH reception occasions.

Optionally, the performing statistics on the number of the consecutive discontinuous transmissions (DTXs) for the sidelink interface based on the one set of physical sidelink feedback channel (PSFCH) reception occasions includes:
increasing a statistical value of the number of the consecutive DTXs by one, in a case that no PSFCH is received in any PSFCH reception occasion in the one set of PSFCH reception occasions; or
resetting a statistical value of the number of the consecutive DTXs to zero, in a case that a PSFCH is received in at least one PSFCH reception occasion in the one set of PSFCH reception occasions.

Optionally, the method further includes: determining a resource location of each PSFCH reception occasion in the one set of PSFCH reception occasions based on a third manner, where the resource location includes: a time-domain location and/or a frequency-domain location; where the third manner includes at least one of the following:
determining based on protocol agreement;
determining based on preconfigured information;
determining based on a first signaling transmitted by a first terminal through a sidelink interface, where the first signaling includes at least one of the following: sidelink control information (SCI); a sidelink media access control control element (MAC CE); or a PC5 radio resource control (RRC) signaling;
determining based on a resource location of first information, and an association relationship between the resource location of the first information and a resource location of each PSFCH reception occasion in one set of PSFCH reception occasions corresponding to the first information; or
determining a resource location of first information, an association relationship between the resource location of the first information and a resource location of a first PSFCH reception occasion in one set of PSFCH reception occasions corresponding to the first information, and an association relationship between resource locations of different PSFCH reception occasions in the one set of PSFCH reception occasions,
where the first information includes a physical sidelink shared channel (PSSCH) and/or a physical sidelink control channel (PSCCH).

Optionally, the first signaling is used to indicate at least one of the following:
a resource location of each PSFCH reception occasion in the one set of PSFCH reception occasions;
a resource location of a first PSFCH reception occasion in the one set of PSFCH reception occasions;
an association relationship between resource locations of different PSFCH receiving mechanisms in the one set of PSFCH reception occasions;
an association relationship between a resource location of first information and a resource location of each PSFCH reception occasion in one set of PSFCH reception occasions corresponding to the first information;
an association relationship between a resource location of first information and a resource location of a first PSFCH reception occasion of PSFCH reception occasions in one set of PSFCH reception occasions corresponding to the first information.

Optionally, in a case that the first signaling includes at least two of the SCI, the sidelink MAC CE, and the PC5 RRC signaling, dynamically varying information in resource location information of the one set of PSFCH reception occasions is transmitted by using the SCI, and semi-statically varying information or fixed information in the resource location information of the one set of PSFCH reception occasions is transmitted by using the sidelink MAC CE or the PC5 RRC signaling.

Optionally, the method further includes: determining whether a PSCCH and/or a PSSCH of a first terminal corresponds to one PSFCH reception occasion or one set of PSFCH reception occasions based on a fourth manner, where the fourth manner includes at least one of the following:
determining based on preconfigured information; or
determining based on a first indication transmitted by the first terminal through a sidelink interface.

Optionally, the first indication is used to indicate:
a PSCCH and/or a PSSCH corresponding to one PSFCH reception occasion; or
a PSCCH and/or a PSSCH corresponding to one set of PSFCH reception occasions.

Optionally, the method further includes: in a case that a PSFCH transmission is successfully performed on a first PSFCH resource of PSFCH resources corresponding to the one set of PSFCH reception occasions, cancelling a PSFCH transmission on a second PSFCH resource or performing a PSFCH transmission on a second PSFCH resource, where the second PSFCH resource is located after the first PSFCH resource in a time domain.

An embodiment of the present disclosure further provides a terminal, and the terminal is a first terminal, includes a memory, a transceiver, and a processor. The memory is configured to store a computer program; the transceiver is configured to receive and transmit data under the control of the processor; and the processor is configured to read the computer program from the memory to perform the following operations:
performing statistics on a number of consecutive discontinuous transmissions (DTXs) for a sidelink interface based on one set of physical sidelink feedback channel (PSFCH) reception occasions, where the one set of PSFCH reception occasions includes at least two PSFCH reception occasions.

Optionally, the processor is further configured to read the computer program from the memory to perform the following operations:
increasing a statistical value of the number of the consecutive DTXs by one, in a case that no PSFCH is received in any PSFCH reception occasion in the one set of PSFCH reception occasions; or
resetting a statistical value of the number of the consecutive DTXs to zero, in a case that a PSFCH is received in at least one PSFCH reception occasion in the one set of PSFCH reception occasions.

Optionally, the processor is further configured to read the computer program from the memory to perform the following operations: determining a resource location of each PSFCH reception occasion in the one set of PSFCH reception occasions based on a first manner, where the resource location includes: a time-domain location and/or a frequency-domain location; where the first manner includes at least one of the following:
determining based on implementation by the first terminal;
determining based on protocol agreement;
determining based on preconfigured information;
determining based on a broadcast signaling or a dedicated signaling transmitted by a network device to which the first terminal belongs;
determining based on indication information transmitted by a network device to which the first terminal belongs;
determining based on a resource location of first information, and an association relationship between the resource location of the first information and a resource location of each PSFCH reception occasion in one set of PSFCH reception occasions corresponding to the first information; or
determining a resource location of first information, an association relationship between the resource location of the first information and a resource location of a first PSFCH reception occasion in one set of PSFCH reception occasions corresponding to the first information, and an association relationship between resource locations of different PSFCH reception occasions in the one set of PSFCH reception occasions,
where the first information includes a physical sidelink shared channel (PSSCH) and/or a physical sidelink control channel (PSCCH).

Optionally, the processor is further configured to read the computer program from the memory to perform the following operations: transmitting one set of PSFCH reception occasions corresponding to a PSSCH and/or a PSCCH to a second terminal through a first signaling, where the first signaling includes at least one of the following:
sidelink control information (SCI);
a sidelink media access control control element (MAC CE); or
a PC5 radio resource control (RRC) signaling.

Optionally, the first signaling is used to indicate at least one of the following:
a resource location of each PSFCH reception occasion in the one set of PSFCH reception occasions;
a resource location of a first PSFCH reception occasion in the one set of PSFCH reception occasions;
an association relationship between resource locations of different PSFCH receiving mechanisms in the one set of PSFCH reception occasions;
an association relationship between a resource location of first information and a resource location of each PSFCH reception occasion in one set of PSFCH reception occasions corresponding to the first information;
an association relationship between a resource location of first information and a resource location of a first PSFCH reception occasion of PSFCH reception occasions in one set of PSFCH reception occasions corresponding to the first information,
where the first information includes a PSSCH and/or a PSCCH.

Optionally, in a case that the first signaling includes at least two of the SCI, the sidelink MAC CE, and the PC5 RRC signaling, dynamically varying information in resource location information of the one set of PSFCH reception occasions is transmitted by using the SCI, and semi-statically varying information or fixed information in the resource location information of the one set of PSFCH reception occasions is transmitted by using the sidelink MAC CE or the PC5 RRC signaling.

Optionally, the processor is further configured to read the computer program from the memory to perform the following operations: in a case that the first signaling includes the sidelink MAC CE or the PC5 RRC signaling, encapsulating the first signaling and the PSSCH into one media access control protocol data unit (MAC PDU) for transmission.

Optionally, the processor is further configured to read the computer program from the memory to perform the following operations: determining whether a PSCCH and/or a PSSCH of the first terminal corresponds to one PSFCH reception occasion or one set of PSFCH reception occasions based on a second manner, where the second manner includes at least one of the following:
determining based on implementation by the first terminal;
determining based on preconfigured information; or
determining based on a broadcast signaling or a dedicated signaling transmitted by a network device to which a first terminal belongs.

Optionally, the processor is further configured to read the computer program from the memory to perform the following operations: transmitting first indication to a second terminal through sidelink interface control information, where the first indication is used to indicate:
a PSCCH and/or a PSSCH corresponding to one PSFCH reception occasion; or
a PSCCH and/or a PSSCH corresponding to one set of PSFCH reception occasions.

Optionally, the processor is further configured to read the computer program from the memory to perform the following operations: in a case that at least one PSFCH feedback is received in the one set of PSFCH reception occasions, if the at least one PSFCH feedback is an acknowledgement (ACK), determining the PSFCH feedback as the ACK; and if the at least one PSFCH feedback is a non-acknowledgement (NACK), determining the PSFCH feedback as the NACK.

An embodiment of the present disclosure provides a terminal. The terminal is a second terminal, and includes a memory, a transceiver and a processor. The memory is configured to store a computer program; the transceiver is configured to receive and transmit data under the control of the processor; and the processor is configured to read the computer program from the memory to perform the following operations:
performing statistics on a number of consecutive discontinuous transmissions (DTXs) for a sidelink interface based on one set of physical sidelink feedback channel (PSFCH) reception occasions, where the one set of PSFCH reception occasions includes at least two PSFCH reception occasions.

Optionally, the processor is further configured to read the computer program from the memory to perform the following operations:
increasing a statistical value of the number of the consecutive DTXs by one, in a case that no PSFCH is received in any PSFCH reception occasion in the one set of PSFCH reception occasions; or
resetting a statistical value of the number of the consecutive DTXs to zero, in a case that a PSFCH is received in at least one PSFCH reception occasion in the one set of PSFCH reception occasions.

Optionally, the processor is further configured to read the computer program from the memory to perform the following operations: determining a resource location of each PSFCH reception occasion in the one set of PSFCH reception occasions based on a third manner, where the resource location includes: a time-domain location and/or a frequency-domain location; where the third manner includes at least one of the following:
determining based on protocol agreement;
determining based on preconfigured information;
determining based on a first signaling transmitted by a first terminal through a sidelink interface, where the first signaling includes at least one of the following: sidelink control information (SCI); a sidelink media access control control element (MAC CE); or a PC5 radio resource control (RRC) signaling;
determining based on a resource location of first information, and an association relationship between the resource location of the first information and a resource location of each PSFCH reception occasion in one set of PSFCH reception occasions corresponding to the first information; or
determining a resource location of first information, an association relationship between the resource location of the first information and a resource location of a first PSFCH reception occasion in one set of PSFCH reception occasions corresponding to the first information, and an association relationship between resource locations of different PSFCH reception occasions in the one set of PSFCH reception occasions,
where the first information includes a physical sidelink shared channel (PSSCH) and/or a physical sidelink control channel (PSCCH).

Optionally, the first signaling is used to indicate at least one of the following:
a resource location of each PSFCH reception occasion in the one set of PSFCH reception occasions;
a resource location of a first PSFCH reception occasion in the one set of PSFCH reception occasions;
an association relationship between resource locations of different PSFCH receiving mechanisms in the one set of PSFCH reception occasions;
an association relationship between a resource location of first information and a resource location of each PSFCH reception occasion in one set of PSFCH reception occasions corresponding to the first information;
an association relationship between a resource location of first information and a resource location of a first PSFCH reception occasion of PSFCH reception occasions in one set of PSFCH reception occasions corresponding to the first information.

Optionally, in a case that the first signaling includes at least two of the SCI, the sidelink MAC CE, and the PC5 RRC signaling, dynamically varying information in resource location information of the one set of PSFCH reception occasions is transmitted by using the SCI, and semi-statically varying information or fixed information in the resource location information of the one set of PSFCH reception occasions is transmitted by using the sidelink MAC CE or the PC5 RRC signaling.

Optionally, the processor is further configured to read the computer program from the memory to perform the following operations: determining whether a PSCCH and/or a PSSCH of a first terminal corresponds to one PSFCH reception occasion or one set of PSFCH reception occasions based on a fourth manner, where the fourth manner includes at least one of the following:
determining based on preconfigured information; or
determining based on a first indication transmitted by the first terminal through a sidelink interface.

Optionally, the first indication is used to indicate:
a PSCCH and/or a PSSCH corresponding to one PSFCH reception occasion; or
a PSCCH and/or a PSSCH corresponding to one set of PSFCH reception occasions.

Optionally, the processor is further configured to read the computer program from the memory to perform the following operations: in a case that a PSFCH transmission is successfully performed on a first PSFCH resource of PSFCH resources corresponding to the one set of PSFCH reception occasions, cancelling a PSFCH transmission on a second PSFCH resource or performing a PSFCH transmission on a second PSFCH resource, where the second PSFCH resource is located after the first PSFCH resource in a time domain.

An embodiment of the present disclosure further provides an apparatus for determining a number of DTXs, applied to a first terminal, including:
a first statistical unit, configured to perform statistics on a number of consecutive discontinuous transmissions (DTXs) for a sidelink interface based on one set of physical sidelink feedback channel (PSFCH) reception occasions, where the one set of PSFCH reception occasions includes at least two PSFCH reception occasions.

An embodiment of the present disclosure further provides an apparatus for determining a number of DTXs, applied to a second terminal, including:
a second statistical unit, configured to perform statistics on a number of consecutive discontinuous transmissions (DTXs) for a sidelink interface based on one set of physical sidelink feedback channel (PSFCH) reception occasions, where the one set of PSFCH reception occasions includes at least two PSFCH reception occasions.

An embodiment of the present disclosure further provides a processor readable storage medium. The processor readable storage medium stores a computer program for causing the processor to execute the method described above.

An embodiment of the present disclosure further provides a chip, including a processor and a communication interface. The communication interface is coupled to the processor, and the processor is configured to run a program or instructions to implement the method as described above.

An embodiment of the present disclosure further provides a computer program product, which is stored in a non-volatile storage medium and executed by at least one processor to implement the method as described above.

The present disclosure has the following beneficial effects. In the above scheme, frequent occurrence of SL RLF of the terminal in the SL-U spectrum can be avoided, and the user experience can be improved.

### BRIEF DESCRIPTION OF THE DRAWINGS

In order to provide a clearer explanation of the technical solutions in the embodiment of the present disclosure or related technologies, a brief introduction will be given to the accompanying drawings required for the description of the embodiments or related technologies. It is obvious that the accompanying drawings described below are only some of the embodiments recorded in the present disclosure. For those skilled in the art, other drawings may be obtained based on these drawings without creative labor.
FIG. 1 shows a first flow chart of a method for determining a number of DTXs in an embodiment of the present disclosure;
FIG. 2 shows a second flow chart of a method for determining a number of DTXs in an embodiment of the present disclosure;
FIG. 3 shows a module schematic diagram of an apparatus for determining a number of DTXs in an embodiment of the present disclosure;
FIG. 4 shows a structural diagram of a terminal in an embodiment of the present disclosure; and
FIG. 5 shows a module schematic diagram of an apparatus for determining a number of DTXs in an embodiment of the present disclosure.

### DETAILED DESCRIPTION

The technical solution of embodiments of the present disclosure will be clearly and completely described hereinafter in conjunction with the accompanying drawings. Apparently, the described embodiments merely relate to a part of, rather than all of, the embodiments of the present disclosure, and based on these embodiments, a person of ordinary skill in the art may obtain other embodiments without creative effort, which shall also fall within the scope of the present disclosure.

Terms such as "first" and "second" in the specification and the claims of the present disclosure are used for distinguishing similar objects and are not necessarily used for describing a specific order or sequence. It should be understood that data used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device.

In the embodiments of the present disclosure, the term "and/or" in the embodiments of the present disclosure describes an association relationship of associated objects, indicating that there may be three types of relationships. For example, A and/or B, which may represent three situations of A alone, both A and B, and B alone. The character "/" generally indicates that the associated objects before and after the character is in an "or" relationship. The term "multiple" in the embodiments of the present disclosure refers to two or more, and other quantifiers are similar thereto.

In the embodiments of the present disclosure, words such as "exemplary" or "for example" are used to indicate as examples, illustrations, or explanations. Any embodiments or design schemes described as "exemplary" or "for example" in the present disclosure should not be interpreted as being more preferred or advantageous than other embodiments or design schemes. Specifically, the use of words such as "exemplary" or "for example" is intended to present relevant concepts in a concrete way.

Below is a brief explanation of the relevant concepts mentioned in the present disclosure.

### 1. Cellular network communication

The cellular network communication method is adopted in the traditional wireless communications, where uplink and downlink data/control information is transmitted between a terminal and a network device through a Uu interface.

### 2. Direct communication

The direct communication refers to the way in which neighboring terminals may transmit data within a close range through a direct communication link (also known as Sidelink or PC5 link). The wireless interface corresponding to Sidelink is referred to as a sidelink interface (also known as Sidelink interface or PC5 interface).

For traditional sidelink licensed spectrum, scheduling information and/or data and corresponding hybrid automatic repeat request (Hybrid Automatic Repeat Request, HARQ) feedback resources are in a one-to-one mapping relationship. Taking sidelink as an example, a physical sidelink shared channel (Physical Sidelink Shared Channel, PSSCH) and/or a physical sidelink control channel (Physical Sidelink Control Channel, PSCCH) only corresponds to one PSFCH reception occasion (reception occasion). If a transmitter does not receive any PSFCH in the PSFCH reception occasion, the transmitter will increment a consecutive DTX counter (generally represented by a parameter numConsecutiveDTX in the protocol) by 1. If the consecutive DTX counter reaches a maximum number of consecutive DTXs for a sidelink (generally represented by a parameter sl-maxNumConsecutiveDTX in the protocol), the radio resource control (Radio Resource Control, RRC) layer will be instructed to trigger radio link failure (Radio Link Failure, RLF) of the sidelink (Sidelink, SL).

### 3. determination criteria for radio link failure of sidelink interface

The current criteria for determining the radio link failure of the sidelink interface include one of the following:
SL radio link control (Radio Link Control, RLC) entity reaches a maximum number of retransmissions for a specific target address;
T400 timeout for a specific target address;
a maximum number of consecutive HARQ DTXs received from the media access control (Media access control, MAC) entity for a specific target address;
integrity check failure occurs to SL-SRB2 or SL-SRB3 for a specific target address.

The embodiments of the present disclosure will be introduced in conjunction with the accompanying drawings. A method and an apparatus for determining a number of DTXs, and a terminal provided in the embodiments of the present disclosure may be applied to a wireless communication system. The wireless communication system may be a system using 5th generation (5th Generation, 5G) mobile communication technology (hereinafter referred to as a 5G system). Those skilled in the art may appreciate that the 5G NR system is only an example and not a limitation.

The embodiment of the present disclosure provides a method and an apparatus for determining a number of DTXs, and terminal, to achieve normal operations of the terminal on SL-U spectrum.

The method and the apparatus are based on the same application concept. Due to the similarity in problem-solving principles between the method and device, implementations of the apparatus and the method may be referred to each other, and the repetition will not be repeated.

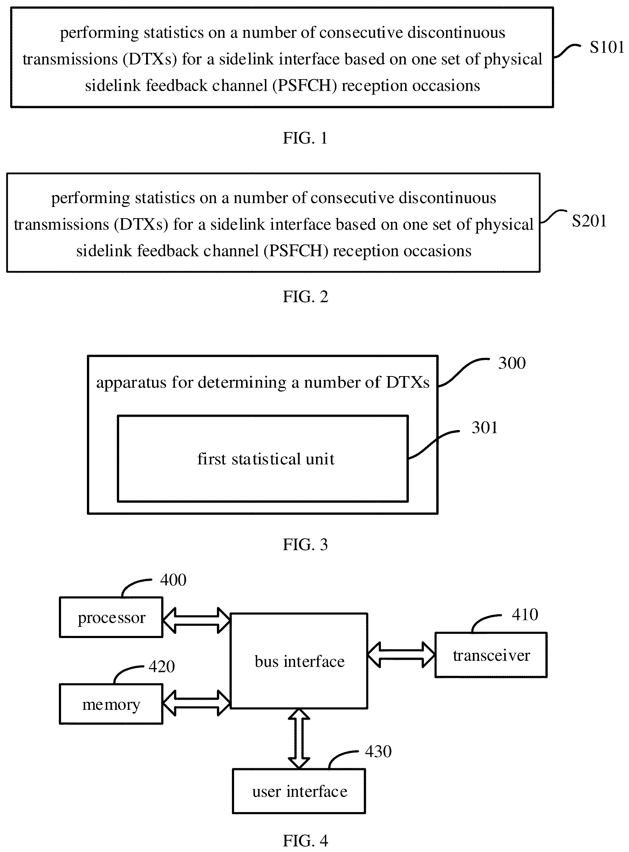

As shown in FIG. 1, an embodiment of the present disclosure provides a method for determining a number of DTXs, executed by a first terminal. The method includes the following steps.

Step S101: performing statistics on a number of consecutive discontinuous transmissions (DTXs) for a sidelink interface based on one set of physical sidelink feedback channel (PSFCH) reception occasions, where the one set of PSFCH reception occasions includes at least two PSFCH reception occasions.

It should be noted that the one set of PSFCH reception occasions is for one PSCCH and/or PSSCH transmission. In the embodiment of the present disclosure, one set of PSFCH reception occasions including at least two PSFCH reception occasions is introduced for one PSCCH and/or one PSSCH of a sidelink interface, thereby reducing the probability of PSFCH LBT failure and improving the PSFCH transmission success rate. Correspondingly, if the number of consecutive DTXs is counted based on a single PSFCH, it will increase the probability of the SL RLF failure. Therefore, using one set of PSFCH reception occasions to count the number of consecutive DTXs may avoid frequent SL RLF occurrences in the SL-U spectrum as much as possible, which may affect the user experience.

It should be noted that the first terminal refers to a PSFCH receiving terminal (i.e., a terminal that receives PSFCH). The first terminal may also be understood as a sidelink interface transmitting terminal.

Optionally, in another embodiment of the present disclosure, the performing statistics on the number of the consecutive discontinuous transmissions (DTXs) for the sidelink interface based on the one set of physical sidelink feedback channel (PSFCH) reception occasions includes one of the following:
A11. increasing a statistical value of the number of the consecutive DTXs by one, in a case that no PSFCH is received in any PSFCH reception occasion in the one set of PSFCH reception occasions;
A12. resetting a statistical value of the number of the consecutive DTXs to zero, in a case that a PSFCH is received in at least one PSFCH reception occasion in the one set of PSFCH reception occasions.

That is to say, for one set of PSFCH reception occasions, only if no PSFCH is received in any occasion of the set of PSFCH reception occasions, the statistical value of the number of the consecutive DTXs is increased by one, otherwise, the statistical value of the number of the consecutive DTXs is reset to zero.

Optionally, in another embodiment of the present disclosure, the method further includes: determining a resource location of each PSFCH reception occasion in the one set of PSFCH reception occasions based on a first manner, where the resource location includes: a time-domain location and/or a frequency-domain location; and the first manner includes at least one of the following.

B 11. determining based on implementation by the first terminal.

B12. determining based on protocol agreement, where this manner refers to that the resource location of each PSFCH reception occasion is agreed upon in the protocol, and the first terminal only needs to directly obtain the resource location.

B13. determining based on preconfigured information.

B14. determining based on a broadcast signaling or a dedicated signaling transmitted by a network device to which the first terminal belongs. This manner refers to that the first terminal determines the resource location of each PSFCH reception occasion in one set of PSFCH reception occasions based on configuration information transmitted by the network device to which it belongs through the broadcast signaling or the dedicated signaling; in other words, the resource location of each PSFCH reception occasion is configured by the configuration information of the network device.

B15. determining based on indication information transmitted by a network device to which the first terminal belongs. It should be noted that for a resource allocation mode (i.e., a resource allocation mode of network scheduling) being mode 1, PSCCH/PSSCH and a corresponding set of PSFCH reception occasions are all scheduled by the network. The first terminal may determine the resource location based on indication information transmitted by the network device (such as scheduling transmitted by the network device or content of the PSDCH transmitted by the network device).

B16. determining based on a resource location of first information, and an association relationship between the resource location of the first information and a resource location of each PSFCH reception occasion in one set of PSFCH reception occasions corresponding to the first information; where the first information includes a physical sidelink shared channel (PSSCH) and/or a physical sidelink control channel (PSCCH).

**It** should be noted that this manner involves configuring the association relationship between the resource location of the first information and the resource location of each PSFCH reception occasion in one set of PSFCH reception occasions corresponding to the first information. The first terminal may determine the resource location of each PSFCH reception occasion in the one set of PSFCH reception occasions corresponding to the first information based on the resource location of the first information and this association relationship.

B 17. determining a resource location of first information, an association relationship between the resource location of the first information and a resource location of a first PSFCH reception occasion in one set of PSFCH reception occasions corresponding to the first information, and an association relationship between resource locations of different PSFCH reception occasions in the one set of PSFCH reception occasions.

It should be noted that this manner involves configuring the association relationship between the resource location of the first information and the resource location of the first PSFCH reception occasion in one set of PSFCH reception occasions corresponding to the first information; and configuring the association relationship between resource locations of different PSFCH reception occasions in the one set of PSFCH reception occasions. The first terminal determines the resource location of the first PSFCH reception occasion in one set of PSFCH reception occasions corresponding to the first information based on the association relationship between the resource location of the first information and the resource location of the first PSFCH reception occasion in the one set of PSFCH reception occasions corresponding to the first information, and then determines resource locations of any other PSFCH reception occasions except the first PSFCH reception occasion in the one set of PSFCH reception occasions based on resource locations of different PSFCH reception occasions in the one set of PSFCH reception occasions.

Optionally, in another embodiment of the present disclosure, the method further includes: transmitting one set of PSFCH reception occasions corresponding to a PSSCH and/or a PSCCH to a second terminal through a first signaling, where the first signaling includes at least one of the following:
C11. sidelink control information (Sidelink Control Information, SCI);
C12. a sidelink media access control control element (Sidelink Media Access Control Element, SL MAC CE); or
C13. a PC5 radio resource control (RRC) signaling.

Optionally, in another embodiment of the present disclosure, the first signaling is used to indicate at least one of the following:
C21. a resource location of each PSFCH reception occasion in one set of PSFCH reception occasions;
C22. a resource location of a first PSFCH reception occasion in one set of PSFCH reception occasions;
C23. an association relationship between resource locations of different PSFCH receiving mechanisms in one set of PSFCH reception occasions;
C24. an association relationship between a resource location of first information and a resource location of each PSFCH reception occasion in one set of PSFCH reception occasions corresponding to the first information;
C25. an association relationship between a resource location of first information and a resource location of a first PSFCH reception occasion of PSFCH reception occasions in one set of PSFCH reception occasions corresponding to the first information,

**It** should be noted that the association relationship mentioned in C23 to C25 may be understood as semi-statically varying information or fixed and unchanged information.

Optionally, the first signaling may indicate only C21, or may further indicate C22 and C23; or may indicate only C24, or may further indicate C23 and C25.

Optionally, in another embodiment of the present disclosure, in a case that the first signaling includes at least two of the SCI, the sidelink MAC CE, and the PC5 RRC signaling, dynamically varying information in resource location information of the one set of PSFCH reception occasions is transmitted by using the SCI, and semi-statically varying information or fixed information in the resource location information of the one set of PSFCH reception occasions is transmitted by using the sidelink MAC CE or the PC5 RRC signaling.

Optionally, the dynamically varying information in the resource location information of one set of PSFCH reception occasions may be C22, which is the resource location of the first PSFCH reception occasion; and the semi-statically varying or the fixed information in the resource location information of the one set of PSFCH reception occasions may be, for example, any one of C23 to C25.

Optionally, in another embodiment of the present disclosure, in a case that the first signaling includes the sidelink MAC CE or PC5 RRC signaling, the method further includes: encapsulating the first signaling and the PSSCH into one media access control protocol data unit (MAC PDU) for transmission.

Optionally, in another embodiment of the present disclosure, the method further includes: determining whether a PSCCH and/or a PSSCH of the first terminal corresponds to one PSFCH reception occasion or one set of PSFCH reception occasions based on a second manner, where the second manner includes at least one of the following:
D11. determining based on implementation by the first terminal;
D12. determining based on preconfigured information; or
D13. determining based on a broadcast signaling or a dedicated signaling transmitted by a network device to which a first terminal belongs.

It should be noted that the network device to which the first terminal belongs may configure the resource location of the PSFCH reception occasion through configuration information transmitted via a broadcast signaling or a dedicated signaling. The first terminal may determine whether the PSCCH and/or the PSSCH of the first terminal corresponds to one PSFCH reception occasion or one set of PSFCH reception occasions based on whether the configuration information is a resource location of one PSFCH reception occasion or a resource location of one set of PSFCH reception occasions. That is to say, in this case, whether the PSCCH and/or the PSSCH of the first terminal corresponds to one PSFCH reception occasion or one set of PSFCH reception occasions is implicitly configured by the configuration information of the network device.

Optionally, after determining whether the PSCCH and/or the PSSCH corresponds to one PSFCH reception occasion or one set of PSFCH reception occasions, the first terminal further needs to notify the second terminal whether the PSCCH and/or the PSSCH corresponds to one PSFCH reception occasion or one set of PSFCH reception occasions. Specifically, in another embodiment of the present disclosure, the method further includes: the first terminal transmitting first indication to a second terminal through sidelink interface control information, where the first indication is used to indicate:
D21. a PSCCH and/or a PSSCH correspond to one PSFCH reception occasion; or
D21. a PSCCH and/or a PSSCH correspond to one set of PSFCH reception occasions.

Optionally, in another embodiment of the present disclosure, the method further includes: in a case that at least one PSFCH feedback is received in the one set of PSFCH reception occasions, if the at least one PSFCH feedback is an acknowledgement (ACK), determining the PSFCH feedback as the ACK; and if the at least one PSFCH feedback is a non-acknowledgement (NACK), determining the PSFCH feedback as the NACK.

That is to say, if feedback information on different PSFCH reception occasions in one set of PSFCH reception occasions are different, as long as one of the feedback information is an ACK, it is considered as the ACK; otherwise, it is considered as the NACK.

Specific application examples of the embodiment of the present disclosure are as follows.

Application scenario 1: the PSFCH receiving terminal determines the number of DTXs. Specific implementation processes of the application scenario 1 are as follows.

In step S11, a first terminal transmits a PSCCH/PSSCH to a second terminal.

It should be noted that the first terminal is a sidelink interface transmitting terminal, and the second terminal is a sidelink interface receiving terminal.

If the first terminal adopts the resource allocation mode of network scheduling, the first terminal obtains downlink control information (DCI) scheduled by a sidelink radio network temporary identifier (Sidelink Radio Network Temporary Identifier, SL-RNTI) or a sidelink configured scheduling RNTI (Sidelink Configured Scheduling RNTI, SL-CS-RNTI) from a network device, and determines a sidelink interface SCI (i.e., PSCCH) and a PSSCH based on the DCI.

If the first terminal uses a resource allocation mode of the terminal autonomously selecting, the first terminal autonomously determines a sidelink interface SCI (i.e., PSCCH) and a PSSCH based on implementation by the first terminal.

After determining the SCI and the PSCCH, the first terminal transmits the SCI and the PSSCH through a sidelink interface.

At the same time, the first terminal determines one PSCCH/PSSCH of the first terminal corresponding to one PSFCH reception occasion or one set of PSFCH reception occasions based on the implementation of the first terminal or configuration information (which may be configuration information or pre-configuration information transmitted by the network device through a broadcasting/dedicated signaling).

In a case that one PSCCH/PSSCH of the first terminal corresponds to one set of PSFCH reception occasions, the method further includes: the first terminal determining a resource location of each PSFCH reception occasion in the one set of PSFCH reception occasions using one of the following manners.

Manner 1: the first terminal determines the resource location of each PSFCH reception occasion in one set of PSFCH reception occasions based on the first terminal.

Manner 2: the first terminal determines the resource location of each PSFCH reception occasion in one set of PSFCH reception occasions based on protocol agreement or configuration information (which may be configuration information or pre-configuration information transmitted by the network device through the broadcast/dedicated signaling).

Manner 3: the first terminal determines the resource location of each PSFCH reception occasion based on a resource location of the PSSCH/PSCCH resource, and an association relationship between the PSSCH/PSCCH resource and the resource location of each PSFCH reception occasion.

Manner 4: the first terminal determines the resource location of each PSFCH reception occasion based on a resource location of the PSSCH/PSCCH resource, an association relationship between the PSSCH/PSCCH resource and a resource location of a first PSFCH reception occasion, and an association relationship between resource locations of different PSFCH reception occasions.

The first terminal transmits one set of PSFCH reception occasions corresponding to a PSSCH/PSCCH to a corresponding sidelink interface receiving terminal, i.e., the second terminal, through a first signaling. The first signaling may be one or a combination of the following information:
SCI;
SL MAC CE;
PC5-RRC signaling.

In a case that the first signaling adopts a combination manner, dynamically varying information in control information may be transmitted through the SCI; semi-statically varying information or fixed information in control information may be transmitted through the SL MAC CE or the PC5-RRC.

In a case that the first signaling includes SL MAC CE or PC5-RRC signaling, the method further includes, but is not limited to that the SL MAC CE or the PC5-RRC signaling needs to be encapsulated with the PSSCH into one MAC PDU for transmission.

In step S12, the first terminal receives the PSFCH transmitted by the second terminal.

After receiving the SCI and the PSSCH transmitted by the first terminal, the second terminal determines whether the SCI and/or the PSCCH correspond to one PSFCH reception occasion or one set of PSFCH reception occasions.

In a case that the SCI and/or the PSCCH correspond to one set of PSFCH reception occasions, a resource location of the one set of PSFCH reception occasions is determined based on the sidelink interface control information in step S11, and a PSFCH transmission is performed by using the one set of PSFCH reception occasions.

It should be noted that if the PSFCH transmitting terminal, i.e., the second terminal, successfully performs the PSFCH transmission on one of the PSFCH reception occasions in one set of PSFCH reception occasions, subsequent PSFCH transmissions in the one set of PSFCH reception occasions will be cancelled or continued.

In step S13, the first terminal executes SL RLF decision.

In a case that feedback information received by different PSFCH reception occasions in a group of PSFCH reception occasions are different, as long as one of the feedback information is an ACK, it is considered as the ACK; otherwise, it is considered as the NACK.

For example, the first terminal performs statistics on a number of consecutive DTXs through a consecutive DTX counter, and sets an initial value of the consecutive DTX counter (usually represented by a parameter numConsecutiveDTX in the protocol) to zero. If no PSFCH is received in the one set of PSFCH reception occasions, the consecutive DTX counter (usually represented by the parameter numConsecutiveDTX in the protocol) is incremented by 1. When the consecutive DTX counter reaches a maximum number of consecutive DTXs of the sidelink interface (usually represented by the parameter sl-maxNumConsecutiveDTX in the protocol), the RRC layer will be instructed to trigger SL RLF. If a PSFCH feedback is received in any PSFCH reception occasion corresponding to the one set of PSFCH reception occasions, the consecutive DTX counter (usually represented by the parameter numConsecutiveDTX in the protocol) will be set to zero.

It should be noted that the method for determining a number of consecutive DTXs of a sidelink interface is provided according to embodiments of the present disclosure, which is used to solve the problem of the increased probability of SL RLF if the radio link failure decision mechanism on the relevant licensed spectrum is directly applied to the unlicensed spectrum. This can ensure that the terminal can avoid frequent SL RLF in the SL-U spectrum, can avoid affecting the user experience.

The technical solution according to embodiments of the present disclosure may be applied to various systems, particularly to a 5th generation mobile communication technology (5th Generation Mobile Communication Technology, 5G) system. For example, an applicable system may be a global system of mobile communication (global system of mobile communication, GSM) system, a code division multiple access (code division multiple access, CDMA) system, a wideband code division multiple access (Wideband Code Division Multiple Access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, and a 5G New Radio (New Radio, NR) system. Each of the various systems includes a terminal and a network device. The systems may further include a core network portion, such as an evolved packet system (Evolved Packet System, EPS), or a 5G system (5GS).

The terminal involved in the embodiments of the present disclosure may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (UE). A wireless terminal can communicate with one or more core networks (CNs) via a radio access network (RAN), and the wireless terminal may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (PCS) phones, cordless phones, session initiated protocol (SIP) phones, wireless local loop (WLL) stations, personal digital assistant (PDA) and other devices. The wireless terminal may also be referred to as a system, subscriber unit, subscriber station, mobile station, mobile, remote station, access point, remote terminal, access terminal, user terminal, user agent and user device, which are not limited in the embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (BTS) in the global system for mobile communications (GSM) or code division multiple access (CDMA), a NodeB in the wide-band code division multiple access (WCDMA), an evolved Node B (eNB or e-NodeB) in long term evolution (LTE) system, a 5G base station (gNB) in 5G network architecture (next generation system), a home evolved Node B (HeNB), a relay node, a femto, a pico, or the like, which is not limited herein. In some network architectures, the network device may include a centralized unit (CU) node and a distributed unit (DU) node, which may be geographically separated.

The network device and the terminal may each perform multi-input multi-output (MIMO) transmission with each other by using one or more antennas. The MIMO transmission may be single user MIMO (SU-MIMO) or multiple user MIMO (MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO (massive-MIMO), and may be diversity transmission, pre-coded transmission, beam forming transmission, or the like.

As shown in FIG. 2, an embodiment of the present disclosure provides a method for determining a number of DTXs, executed by a second terminal. The method includes the following steps.

Step S201: performing statistics on a number of consecutive discontinuous transmissions (DTXs) for a sidelink interface based on one set of physical sidelink feedback channel (PSFCH) reception occasions, where the one set of PSFCH reception occasions includes at least two PSFCH reception occasions.

It should be noted that in the embodiments of the present disclosure, one set of PSFCH reception occasions including at least two PSFCH reception occasions is introduced for a sidelink interface, to increase time-frequency resources for PSFCH transmission. Based on this set of PSFCH reception occasions, statistics on the number of consecutive DRXs is performed to reduce the number of radio link failures caused by LBT failure, which can avoid frequent SL RLF in the SL-U spectrum and can avoid affecting user experience.

It should be noted that the second terminal is a PSFCH transmitting terminal (i.e., the terminal that transmits the PSFCH). The second terminal may also be understood as a sidelink interface receiving terminal.

Optionally, in another embodiment of the present disclosure, the performing statistics on the number of the consecutive discontinuous transmissions (DTXs) for the sidelink interface based on the one set of physical sidelink feedback channel (PSFCH) reception occasions includes one of the following:
E11. increasing a statistical value of the number of the consecutive DTXs by one, in a case that no PSFCH is received in any PSFCH reception occasion in the one set of PSFCH reception occasions;
E12. resetting a statistical value of the number of the consecutive DTXs to zero, in a case that a PSFCH is received in at least one PSFCH reception occasion in the one set of PSFCH reception occasions.

That is to say, for one set of PSFCH reception occasions, only if no PSFCH is received in any occasion of the set of PSFCH reception occasions, the statistical value of the number of the consecutive DTXs is increased by one, otherwise, the statistical value of the number of the consecutive DTXs is reset to zero.

Optionally, in another embodiment of the present disclosure, the method further includes: determining a resource location of each PSFCH reception occasion in the one set of PSFCH reception occasions based on a third manner, where the resource location includes: a time-domain location and/or a frequency-domain location; and the third manner includes at least one of the following:
F11. determining based on protocol agreement. This manner refers to that the resource location of each PSFCH reception occasion is agreed upon in the protocol, and the second terminal only needs to directly obtain it.
F12. determining based on preconfigured information.
F13. determining based on a first signaling transmitted by a first terminal through a sidelink interface, where the first signaling includes at least one of the following: sidelink control information (SCI); a sidelink media access control control element (MAC CE); or a PC5 radio resource control (RRC) signaling. It should be noted that in this manner, the resource location of each PSFCH reception occasion is notified by the first terminal to the second terminal.
F14. determining based on a resource location of first information, and an association relationship between the resource location of the first information and a resource location of each PSFCH reception occasion in one set of PSFCH reception occasions corresponding to the first information; where the first information includes a PSSCH and/or a PSCCH.

**It** should be noted that this manner involves configuring the association relationship between the resource location of the first information and the resource location of each PSFCH reception occasion in one set of PSFCH reception occasions corresponding to the first information. The second terminal may determine the resource location of each PSFCH reception occasion in the one set of PSFCH reception occasions corresponding to the first information based on the resource location of the first information and this association relationship.

F15. determining a resource location of first information, an association relationship between the resource location of the first information and a resource location of a first PSFCH reception occasion in one set of PSFCH reception occasions corresponding to the first information, and an association relationship between resource locations of different PSFCH reception occasions in the one set of PSFCH reception occasions.

**It** should be noted that this manner involves configuring the association relationship between the resource location of the first information and the resource location of the first PSFCH reception occasion in one set of PSFCH reception occasions corresponding to the first information; and configuring the association relationship between resource locations of different PSFCH reception occasions in the one set of PSFCH reception occasions. The second terminal determines the resource location of the first PSFCH reception occasion in one set of PSFCH reception occasions corresponding to the first information based on the association relationship between the resource location of the first information and the resource location of the first PSFCH reception occasion in the one set of PSFCH reception occasions corresponding to the first information, and then determines resource locations of any other PSFCH reception occasions except the first PSFCH reception occasion in the one set of PSFCH reception occasions based on resource locations of different PSFCH reception occasions in the one set of PSFCH reception occasions.

Optionally, in another embodiment of the present disclosure, the first signaling in the method is used to indicate at least one of the following:
G11. a resource location of each PSFCH reception occasion in the one set of PSFCH reception occasions;
G12. a resource location of a first PSFCH reception occasion in the one set of PSFCH reception occasions;
G13. an association relationship between resource locations of different PSFCH receiving mechanisms in the one set of PSFCH reception occasions;
G14. an association relationship between a resource location of first information and a resource location of each PSFCH reception occasion in one set of PSFCH reception occasions corresponding to the first information;
G15. an association relationship between a resource location of first information and a resource location of a first PSFCH reception occasion of PSFCH reception occasions in one set of PSFCH reception occasions corresponding to the first information,

It should be noted that the association relationship mentioned in G13 to G15 may be understood as semi-statically varying information, or fixed and unchanged information.

Optionally, in another embodiment of the present disclosure, in a case that the first signaling includes at least two of the SCI, the sidelink MAC CE, and the PC5 RRC signaling, dynamically varying information in resource location information of the one set of PSFCH reception occasions is transmitted by using the SCI, and semi-statically varying information or fixed information in the resource location information of the one set of PSFCH reception occasions is transmitted by using the sidelink MAC CE or the PC5 RRC signaling.

Optionally, the dynamically varying information in the resource location information of one set of PSFCH reception occasions may be G12, which is the resource location of the first PSFCH reception occasion; the semi-statically varying information or the fixed information in the resource location information of this set of PSFCH reception occasions may be, for example, any one of G13 to G15.

Optionally, in another embodiment of the present disclosure, the method further includes: determining whether a PSCCH and/or a PSSCH of the first terminal corresponds to one PSFCH reception occasion or one set of PSFCH reception occasions based on a fourth manner, where the fourth manner includes at least one of the following:
H11, determining based on preconfigured information; or
H12, determining based on a first indication transmitted by a first terminal through a sidelink interface.

Furthermore, the first indication is used to indicate one of the following:
J11, a PSCCH and/or a PSSCH corresponding to one PSFCH reception occasion;
J12, a PSCCH and/or a PSSCH corresponding to one set of PSFCH reception occasions.

Optionally, in another embodiment of the present disclosure, the method further includes: in a case that a PSFCH transmission is successfully performed on a first PSFCH resource of PSFCH resources corresponding to the one set of PSFCH reception occasions, cancelling a PSFCH transmission on a second PSFCH resource or performing a PSFCH transmission on a second PSFCH resource, where the second PSFCH resource is located after the first PSFCH resource in a time domain.

That is to say, if the second terminal successfully performs a PSFCH transmission in one PSFCH reception occasion in one set of PSFCH reception occasions, subsequent PSFCH transmissions in the one set of PSFCH reception occasions will be cancelled or continued.

Specific application examples of the embodiment of the present disclosure are as follows.

Application scenario 2: the PSFCH transmitting terminal determines the number of DTXs. Specific implementation processes of the application scenario 2 are as follows.

In step S21, a first terminal transmits a PSCCH/PSSCH to a second terminal.

It should be noted that the first terminal is a sidelink interface transmitting terminal, and the second terminal is a sidelink interface receiving terminal.

If the first terminal uses a resource allocation mode of network scheduling, the first terminal obtains a DCI scheduled by SL-RNTI or SL-CS-RNTI from a network device, and determines a sidelink interface SCI (i.e., PSCCH) and PSSCH based on the DCI.

If the first terminal uses a resource allocation mode of the terminal autonomously selecting, the first terminal autonomously determines a sidelink interface SCI (i.e., PSCCH) and a PSSCH based on implementation by the first terminal.

After determining the SCI and the PSCCH, the first terminal transmits the SCI and the PSSCH through a sidelink interface.

At the same time, the first terminal determines one PSCCH/PSSCH of the first terminal corresponding to one PSFCH reception occasion or one set of PSFCH reception occasions based on the implementation by the first terminal or configuration information (which may be configuration information or pre-configuration information transmitted by the network device through a broadcasting/dedicated signaling).

In a case that one PSCCH/PSSCH of the first terminal corresponds to one set of PSFCH reception occasions, the method further includes: the first terminal determining a resource location of each PSFCH reception occasion in the one set of PSFCH reception occasions using one of the following manners.

Manner 1: the first terminal determines the resource location of each PSFCH reception occasion in one set of PSFCH reception occasions based on the implementation by the first terminal.

Manner 2: the first terminal determines the resource location of each PSFCH reception occasion in one set of PSFCH reception occasions based on protocol agreement or configuration information (which may be configuration information or pre-configuration information transmitted by the network device through the broadcast/dedicated signaling).

Manner 3: the first terminal determines the resource location of each PSFCH reception occasion based on a resource location of the PSSCH/PSCCH resource, and an association relationship between the PSSCH/PSCCH resource and the resource location of each PSFCH reception occasion.

Manner 4: the first terminal determines the resource location of each PSFCH reception occasion based on a resource location of the PSSCH/PSCCH resource, an association relationship between the PSSCH/PSCCH resource and a resource location of a first PSFCH reception occasion, and an association relationship between resource locations of different PSFCH reception occasions.

The first terminal transmits one set of PSFCH reception occasions corresponding to a PSSCH/PSCCH to a corresponding sidelink interface receiving terminal, i.e., the second terminal, through a first signaling. The first signaling may be one or a combination of the following information:
SCI;
SL MAC CE;
PC5-RRC signaling.

In a case that the first signaling adopts a combination manner, dynamically varying information in control information may be transmitted through the SCI; semi-statically varying information or fixed information in control information may be transmitted through the SL MAC CE or the PC5-RRC.

In a case that the first signaling includes SL MAC CE or PC5-RRC signaling, the method further includes, but is not limited to that the SL MAC CE or the PC5-RRC signaling needs to be encapsulated with the PSSCH into one MAC PDU for transmission.

In step S22, the second terminal transmits the PSFCH to the first terminal;

After receiving the SCI and the PSSCH transmitted by the first terminal, the second terminal determines whether the SCI and/or the PSCCH correspond to one PSFCH reception occasion or one set of PSFCH reception occasions.

In a case that the SCI and/or the PSCCH correspond to one set of PSFCH reception occasions, if the first terminal transmits a first signaling, the second terminal directly determines the resource location of each PSFCH reception occasion based on the first signaling; if the first terminal does not transmit the first signaling, the second terminal may determine the resource location of each PSFCH reception occasion by using the following manners:
manner A: determining a resource location of each PSFCH reception occasion based on the protocol agreement;
manner B: determining a resource location of each PSFCH reception occasion based on preconfigured information;
manner C: the second terminal determining a resource location of each PSFCH reception occasion based on a resource location of a PSSCH/PSCCH resource, and an association relationship between the PSSCH/PSCCH resource and the resource location of each PSFCH reception occasion;
manner D: the second terminal determining a resource location of each PSFCH reception occasion based on a resource location of the PSSCH/PSCCH resource, an association relationship between the PSSCH/PSCCH resource and a resource location of a first PSFCH reception occasion, and an association relationship between resource locations of different PSFCH reception occasions.

After obtaining resource locations of all PSFCH reception occasions, the second terminal performs a PSFCH transmission.

It should be noted that if the PSFCH transmitting terminal, i.e., the second terminal, successfully performs a PSFCH transmission in any PSFCH reception occasion in one set of PSFCH reception occasions, subsequent PSFCH transmissions in the one set of PSFCH reception occasions will be cancelled or continued.

In step S23, the second terminal executes SL RLF decision.

For example, the second terminal uses a consecutive DTX counter to count the number of consecutive DTXs, and sets an initial value of the consecutive DTX counter (usually represented by a parameter numConsecutiveDTX in the protocol) to zero. If no PSFCH is transmitted in any occasion in the one set of PSFCH reception occasions, the consecutive DTX counter (usually represented by parameter numConsecutiveDTX in the protocol) will be incremented by 1. If the consecutive DTX counter reaches a maximum number of consecutive DTXs of the sidelink interface (usually represented by a parameter sl-maxNumConsecutiveDTX in the protocol), the RRC layer will be instructed to trigger SL RLF. If a PSFCH feedback is transmitted once on one set of PSFCH resources, the consecutive DTX counter (usually represented by the parameter numConsecutiveDTX in the protocol) will be reset to zero.

It should be noted that the method for determining a number of consecutive DTXs of a sidelink interface is provided according to embodiments of the present disclosure, which is used to solve the problem of the increased probability of SL RLF if the radio link failure decision mechanism on the relevant licensed spectrum is directly applied to the unlicensed spectrum. This can ensure that the terminal can avoid frequent SL RLF in the SL-U spectrum, can avoid affecting the user experience.

As shown in FIG. 3, an embodiment of the present disclosure provides an apparatus 300 for determining a number of DTXs, applied to a first terminal, including: a first statistical unit 301, configured to perform statistics on a number of consecutive discontinuous transmissions (DTXs) for a sidelink interface based on one set of physical sidelink feedback channel (PSFCH) reception occasions, where the one set of PSFCH reception occasions includes at least two PSFCH reception occasions.

Optionally, the first statistical unit 301 is configured to:
increase a statistical value of the number of the consecutive DTXs by one, in a case that no PSFCH is received in any PSFCH reception occasion in the one set of PSFCH reception occasions; or
reset a statistical value of the number of the consecutive DTXs to zero, in a case that a PSFCH is received in at least one PSFCH reception occasion in the one set of PSFCH reception occasions.

Optionally, the apparatus further includes: a first determining unit, configured to determine a resource location of each PSFCH reception occasion in the one set of PSFCH reception occasions based on a first manner, where the resource location includes: a time-domain location and/or a frequency-domain location; and the first manner includes at least one of the following:
determining based on implementation by the first terminal;
determining based on protocol agreement;
determining based on preconfigured information;
determining based on a broadcast signaling or a dedicated signaling transmitted by a network device to which the first terminal belongs;
determining based on indication information transmitted by a network device to which the first terminal belongs;
determining based on a resource location of first information, and an association relationship between the resource location of the first information and a resource location of each PSFCH reception occasion in one set of PSFCH reception occasions corresponding to the first information; or
determining a resource location of first information, an association relationship between the resource location of the first information and a resource location of a first PSFCH reception occasion in one set of PSFCH reception occasions corresponding to the first information, and an association relationship between resource locations of different PSFCH reception occasions in the one set of PSFCH reception occasions,
where the first information includes a physical sidelink shared channel (PSSCH) and/or a physical sidelink control channel (PSCCH).

Optionally, the apparatus further includes: a first transmitting unit, configured to transmit one set of PSFCH reception occasions corresponding to a PSSCH and/or a PSCCH to a second terminal through a first signaling, where the first signaling includes at least one of the following:
sidelink control information (SCI);
a sidelink media access control control element (MAC CE); or
a PC5 radio resource control (RRC) signaling.

Optionally, the first signaling is used to indicate at least one of the following:
a resource location of each PSFCH reception occasion in the one set of PSFCH reception occasions;
a resource location of a first PSFCH reception occasion in the one set of PSFCH reception occasions;
an association relationship between resource locations of different PSFCH receiving mechanisms in the one set of PSFCH reception occasions;
an association relationship between a resource location of first information and a resource location of each PSFCH reception occasion in one set of PSFCH reception occasions corresponding to the first information;
an association relationship between a resource location of first information and a resource location of a first PSFCH reception occasion of PSFCH reception occasions in one set of PSFCH reception occasions corresponding to the first information,
where the first information includes a PSSCH and/or a PSCCH.

Optionally, in a case that the first signaling includes at least two of the SCI, the sidelink MAC CE, and the PC5 RRC signaling, dynamically varying information in resource location information of the one set of PSFCH reception occasions is transmitted by using the SCI, and semi-statically varying information or fixed information in the resource location information of the one set of PSFCH reception occasions is transmitted by using the sidelink MAC CE or the PC5 RRC signaling.

Optionally, in a case that the first signaling includes the sidelink MAC CE or the PC5 RRC signaling, the apparatus further includes: a first processing unit, configured to encapsulate the first signaling and the PSSCH into one media access control protocol data unit (MAC PDU) for transmission.

Optionally, the apparatus further includes: a second determining unit, configured to determine whether a PSCCH and/or a PSSCH of the first terminal corresponds to one PSFCH reception occasion or one set of PSFCH reception occasions based on a second manner, where the second manner includes at least one of the following:
determining based on implementation by the first terminal;
determining based on preconfigured information; or
determining based on a broadcast signaling or a dedicated signaling transmitted by a network device to which a first terminal belongs.

Optionally, the apparatus further includes: a second transmitting unit, configured to transmit first indication to a second terminal through sidelink interface control information, where the first indication is used to indicate: a PSCCH and/or a PSSCH corresponding to one PSFCH reception occasion; or a PSCCH and/or a PSSCH corresponding to one set of PSFCH reception occasions.

Optionally, the apparatus further includes: a third determining unit, configured to: in a case that at least one PSFCH feedback is received in the one set of PSFCH reception occasions, if the at least one PSFCH feedback is an acknowledgement (ACK), determine the PSFCH feedback as the ACK; and if the at least one PSFCH feedback is a non-acknowledgement (NACK), determining the PSFCH feedback as the NACK.

It should be noted that the apparatus embodiments corresponds one-to-one with the above method embodiments, and all implementations in the above method embodiments are applicable to the apparatus embodiments and can achieve the same technical effects.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

As shown in FIG. 4, an embodiment of the present disclosure further provides a terminal. The terminal is a first terminal, includes a processor 400, a transceiver 410, a memory 420, and a program stored on the memory 420 and executable by the processor 400. The transceiver 410 is connected to the processor 400 and the memory 420 through a bus interface, and the processor 400 is configured to read the program in the memory to perform the following processes:

performing statistics on a number of consecutive discontinuous transmissions (DTXs) for a sidelink interface based on one set of physical sidelink feedback channel (PSFCH) reception occasions, where the one set of PSFCH reception occasions includes at least two PSFCH reception occasions.

The transceiver 410 is configured to receive and transmit data under the control of processor 400.

In FIG. 4, the bus architecture may include any number of interconnected buses and bridges, specifically one or more processors represented by processor 400 and various circuits represented by memory 420 connected together. The bus architecture may also link various other circuits such as peripheral devices, voltage regulators, and power management circuits together, which are well-known in this field. Therefore, this article will not further describe them. The bus interface provides interfaces. The transceiver 410 may be multiple components, including a transmitter and a receiver, providing a unit for communicating with various other devices over transmission media, including wireless channels, wired channels, optical cables, and other transmission media. For different user devices, user interface 430 may also be an interface that may connect external and internal devices, including but not limited to keyboards, displays, speakers, microphones, joysticks, etc.

The processor 400 is responsible for managing the bus architecture and usual processing, while the memory 420 may store the data used by the processor 400 when performing operations.

Optionally, processor 400 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

The processor is configured to execute any one of the methods provided in the embodiments of the present application according to the obtained executable instructions by invoking the computer program stored in the memory. The processor and the memory may also be physically separated.

Optionally, the processor is configured to read the computer program from the memory to perform the following operations:
increasing a statistical value of the number of the consecutive DTXs by one, in a case that no PSFCH is received in any PSFCH reception occasion in the one set of PSFCH reception occasions; or
resetting a statistical value of the number of the consecutive DTXs to zero, in a case that a PSFCH is received in at least one PSFCH reception occasion in the one set of PSFCH reception occasions.

Optionally, the processor is configured to read the computer program from the memory to perform the following operations:
determining a resource location of each PSFCH reception occasion in the one set of PSFCH reception occasions based on a first manner, where the resource location includes: a time-domain location and/or a frequency-domain location; and
where the first manner includes at least one of the following:
determining based on implementation by the first terminal;
determining based on protocol agreement;
determining based on preconfigured information;
determining based on a broadcast signaling or a dedicated signaling transmitted by a network device to which the first terminal belongs;
determining based on indication information transmitted by a network device to which the first terminal belongs;
determining based on a resource location of first information, and an association relationship between the resource location of the first information and a resource location of each PSFCH reception occasion in one set of PSFCH reception occasions corresponding to the first information; or
determining a resource location of first information, an association relationship between the resource location of the first information and a resource location of a first PSFCH reception occasion in one set of PSFCH reception occasions corresponding to the first information, and an association relationship between resource locations of different PSFCH reception occasions in the one set of PSFCH reception occasions,
where the first information includes a physical sidelink shared channel (PSSCH) and/or a physical sidelink control channel (PSCCH).

Optionally, the processor is configured to read the computer program from the memory to perform the following operations:
transmitting one set of PSFCH reception occasions corresponding to a PSSCH and/or a PSCCH to a second terminal through a first signaling,
where the first signaling includes at least one of the following:
sidelink control information (SCI);
a sidelink media access control control element (MAC CE); or
a PC5 radio resource control (RRC) signaling.

Optionally, the first signaling is used to indicate at least one of the following:
a resource location of each PSFCH reception occasion in the one set of PSFCH reception occasions;
a resource location of a first PSFCH reception occasion in the one set of PSFCH reception occasions;
an association relationship between resource locations of different PSFCH receiving mechanisms in the one set of PSFCH reception occasions;
an association relationship between a resource location of first information and a resource location of each PSFCH reception occasion in one set of PSFCH reception occasions corresponding to the first information;
an association relationship between a resource location of first information and a resource location of a first PSFCH reception occasion of PSFCH reception occasions in one set of PSFCH reception occasions corresponding to the first information,
where the first information includes a PSSCH and/or a PSCCH.

Optionally, in a case that the first signaling includes at least two of the SCI, the sidelink MAC CE, and the PC5 RRC signaling, dynamically varying information in resource location information of the one set of PSFCH reception occasions is transmitted by using the SCI, and semi-statically varying information or fixed information in the resource location information of the one set of PSFCH reception occasions is transmitted by using the sidelink MAC CE or the PC5 RRC signaling.

Optionally, the processor is further configured to read the computer program from the memory to perform the following operations: in a case that the first signaling includes the sidelink MAC CE or the PC5 RRC signaling, encapsulating the first signaling and the PSSCH into one media access control protocol data unit (MAC PDU) for transmission.

Optionally, the processor is configured to read the computer program from the memory to perform the following operations:
determining whether a PSCCH and/or a PSSCH of the first terminal corresponds to one PSFCH reception occasion or one set of PSFCH reception occasions based on a second manner,
where the second manner includes at least one of the following:
determining based on implementation by the first terminal;
determining based on preconfigured information; or
determining based on a broadcast signaling or a dedicated signaling transmitted by a network device to which a first terminal belongs.

Optionally, the processor is configured to read the computer program from the memory to perform the following operations: transmitting first indication to a second terminal through sidelink interface control information, where the first indication is used to indicate:
a PSCCH and/or a PSSCH corresponding to one PSFCH reception occasion; or
a PSCCH and/or a PSSCH corresponding to one set of PSFCH reception occasions.

Optionally, the processor is configured to read the computer program from the memory to perform the following operations: in a case that at least one PSFCH feedback is received in the one set of PSFCH reception occasions, if the at least one PSFCH feedback is an acknowledgement (ACK), determining the PSFCH feedback as the ACK; and if the at least one PSFCH feedback is a non-acknowledgement (NACK), determining the PSFCH feedback as the NACK.

It should be noted that the above terminal provided in the embodiment of the present disclosure can implement all method steps implemented in the above embodiments about the method for determining a beam configuration parameter, and can achieve the same technical effects. Therefore, the description and beneficial effects of this embedment that are the same as the method embodiments will not be described here in detail.

The embodiment of the present disclosure also provides a computer-readable storage medium on which a computer program is stored. The computer program, when executed by a processor, implements steps of the method for determining a number of DTXs applied to a first terminal. The processor readable storage medium may be any available medium or data storage device that can be accessed by a processor, including but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, non-volatile memory (NAND FLASH), solid state disk (SSD)), etc.

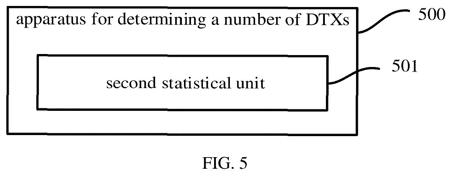

As shown in FIG. 5, an embodiment of the present disclosure provides an apparatus 500 for determining a number of DTXs, applied to a second terminal, including:
a second statistical unit 501, configured to perform statistics on a number of consecutive discontinuous transmissions (DTXs) for a sidelink interface based on one set of physical sidelink feedback channel (PSFCH) reception occasions, where the one set of PSFCH reception occasions includes at least two PSFCH reception occasions.

Optionally, the second statistical unit 501 is configured to:
increase a statistical value of the number of the consecutive DTXs by one, in a case that no PSFCH is received in any PSFCH reception occasion in the one set of PSFCH reception occasions; or
reset a statistical value of the number of the consecutive DTXs to zero, in a case that a PSFCH is received in at least one PSFCH reception occasion in the one set of PSFCH reception occasions.

Optionally, the apparatus further includes:
a fourth determining unit, configured to determine a resource location of each PSFCH reception occasion in the one set of PSFCH reception occasions based on a third manner, where the resource location includes: a time-domain location and/or a frequency-domain location; and
where the third manner includes at least one of the following:
determining based on protocol agreement;
determining based on preconfigured information;
determining based on a first signaling transmitted by a first terminal through a sidelink interface, where the first signaling includes at least one of the following: sidelink control information (SCI); a sidelink media access control control element (MAC CE); or a PC5 radio resource control (RRC) signaling;
determining based on a resource location of first information, and an association relationship between the resource location of the first information and a resource location of each PSFCH reception occasion in one set of PSFCH reception occasions corresponding to the first information; or
determining a resource location of first information, an association relationship between the resource location of the first information and a resource location of a first PSFCH reception occasion in one set of PSFCH reception occasions corresponding to the first information, and an association relationship between resource locations of different PSFCH reception occasions in the one set of PSFCH reception occasions,
where the first information includes a physical sidelink shared channel (PSSCH) and/or a physical sidelink control channel (PSCCH).

Optionally, the first signaling is used to indicate at least one of the following:
a resource location of each PSFCH reception occasion in the one set of PSFCH reception occasions;
a resource location of a first PSFCH reception occasion in the one set of PSFCH reception occasions;
an association relationship between resource locations of different PSFCH receiving mechanisms in the one set of PSFCH reception occasions;
an association relationship between a resource location of first information and a resource location of each PSFCH reception occasion in one set of PSFCH reception occasions corresponding to the first information;
an association relationship between a resource location of first information and a resource location of a first PSFCH reception occasion of PSFCH reception occasions in one set of PSFCH reception occasions corresponding to the first information.

Optionally, in a case that the first signaling includes at least two of the SCI, the sidelink MAC CE, and the PC5 RRC signaling, dynamically varying information in resource location information of the one set of PSFCH reception occasions is transmitted by using the SCI, and semi-statically varying information or fixed information in the resource location information of the one set of PSFCH reception occasions is transmitted by using the sidelink MAC CE or the PC5 RRC signaling.

Optionally, the apparatus further includes: a fifth determining unit, configured to determine whether a PSCCH and/or a PSSCH of a first terminal corresponds to one PSFCH reception occasion or one set of PSFCH reception occasions based on a fourth manner, where the fourth manner includes at least one of the following:
determining based on preconfigured information; or
determining based on a first indication transmitted by the first terminal through a sidelink interface.

Optionally, the first indication is used to indicate:
a PSCCH and/or a PSSCH corresponding to one PSFCH reception occasion; or
a PSCCH and/or a PSSCH corresponding to one set of PSFCH reception occasions.

Optionally, the apparatus further includes: a second processing unit, configured to: in a case that a PSFCH transmission is successfully performed on a first PSFCH resource of PSFCH resources corresponding to the one set of PSFCH reception occasions, cancel a PSFCH transmission on a second PSFCH resource or perform a PSFCH transmission on a second PSFCH resource, where the second PSFCH resource is located after the first PSFCH resource in a time domain.

It should be noted that the apparatus embodiments correspond one-to-one with the above method embodiments, and all implementations in the above method embodiments are applicable to the apparatus embodiments and can achieve the same technical effects.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

An embodiment of the present disclosure further provides a terminal. The terminal is a second terminal. The structure of the second terminal is as shown in FIG. 4 and will not be repeated here.

The processor is configured to read the computer program in the memory to perform the following operations: performing statistics on a number of consecutive discontinuous transmissions (DTXs) for a sidelink interface based on one set of physical sidelink feedback channel (PSFCH) reception occasions, where the one set of PSFCH reception occasions includes at least two PSFCH reception occasions.

Optionally, the processor is configured to read the computer program from the memory to perform the following operations:
increasing a statistical value of the number of the consecutive DTXs by one, in a case that no PSFCH is received in any PSFCH reception occasion in the one set of PSFCH reception occasions; or
resetting a statistical value of the number of the consecutive DTXs to zero, in a case that a PSFCH is received in at least one PSFCH reception occasion in the one set of PSFCH reception occasions.

Optionally, the processor is configured to read the computer program from the memory to perform the following operations: determining a resource location of each PSFCH reception occasion in the one set of PSFCH reception occasions based on a third manner, where the resource location includes: a time-domain location and/or a frequency-domain location; where the third manner includes at least one of the following:
determining based on protocol agreement;
determining based on preconfigured information;
determining based on a first signaling transmitted by a first terminal through a sidelink interface, where the first signaling includes at least one of the following: sidelink control information (SCI); a sidelink media access control control element (MAC CE); or a PC5 radio resource control (RRC) signaling;
determining based on a resource location of first information, and an association relationship between the resource location of the first information and a resource location of each PSFCH reception occasion in one set of PSFCH reception occasions corresponding to the first information; or
determining a resource location of first information, an association relationship between the resource location of the first information and a resource location of a first PSFCH reception occasion in one set of PSFCH reception occasions corresponding to the first information, and an association relationship between resource locations of different PSFCH reception occasions in the one set of PSFCH reception occasions,
where the first information includes a physical sidelink shared channel (PSSCH) and/or a physical sidelink control channel (PSCCH).

Optionally, the first signaling is used to indicate at least one of the following:
a resource location of each PSFCH reception occasion in the one set of PSFCH reception occasions;
a resource location of a first PSFCH reception occasion in the one set of PSFCH reception occasions;
an association relationship between resource locations of different PSFCH receiving mechanisms in the one set of PSFCH reception occasions;
an association relationship between a resource location of first information and a resource location of each PSFCH reception occasion in one set of PSFCH reception occasions corresponding to the first information;
an association relationship between a resource location of first information and a resource location of a first PSFCH reception occasion of PSFCH reception occasions in one set of PSFCH reception occasions corresponding to the first information.

Optionally, in a case that the first signaling includes at least two of the SCI, the sidelink MAC CE, and the PC5 RRC signaling, dynamically varying information in resource location information of the one set of PSFCH reception occasions is transmitted by using the SCI, and semi-statically varying information or fixed information in the resource location information of the one set of PSFCH reception occasions is transmitted by using the sidelink MAC CE or the PC5 RRC signaling.

Optionally, the processor is configured to read the computer program from the memory to perform the following operations: determining whether a PSCCH and/or a PSSCH of a first terminal corresponds to one PSFCH reception occasion or one set of PSFCH reception occasions based on a fourth manner, where the fourth manner includes at least one of the following:
determining based on preconfigured information; or
determining based on a first indication transmitted by the first terminal through a sidelink interface.

Optionally, the first indication is used to indicate:
a PSCCH and/or a PSSCH corresponding to one PSFCH reception occasion; or
a PSCCH and/or a PSSCH corresponding to one set of PSFCH reception occasions.

Optionally, the processor is configured to read the computer program from the memory to perform the following operations: in a case that a PSFCH transmission is successfully performed on a first PSFCH resource of PSFCH resources corresponding to the one set of PSFCH reception occasions, cancelling a PSFCH transmission on a second PSFCH resource or performing a PSFCH transmission on a second PSFCH resource, where the second PSFCH resource is located after the first PSFCH resource in a time domain.

It should be noted that the above terminal provided in the embodiment of the present disclosure can implement all method steps implemented in the above method embodiments, and can achieve the same technical effects. Therefore, the part and beneficial effects of this embedment that are the same as the method embodiments will not be described here in detail.

An embodiment of the present disclosure further provides a computer-readable storage medium, on which a computer program is stored. The computer program, when executed by a processor, implements steps of the method for determining a number of DTXs applied to the second terminal. The processor readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. A method for determining a number of DTXs, executed by a first terminal, comprising:
performing statistics on a number of consecutive discontinuous transmissions (DTXs) for a sidelink interface based on one set of physical sidelink feedback channel (PSFCH) reception occasions, wherein the one set of PSFCH reception occasions comprises at least two PSFCH reception occasions.

2. The method according to claim 1, wherein the performing statistics on the number of the consecutive discontinuous transmissions (DTXs) for the sidelink interface based on the one set of physical sidelink feedback channel (PSFCH) reception occasions comprises:
increasing a statistical value of the number of the consecutive DTXs by one, in a case that no PSFCH is received in any PSFCH reception occasion in the one set of PSFCH reception occasions; or
resetting a statistical value of the number of the consecutive DTXs to zero, in a case that a PSFCH is received in at least one PSFCH reception occasion in the one set of PSFCH reception occasions.

3. The method according to claim 1 or 2, further comprising:
determining a resource location of each PSFCH reception occasion in the one set of PSFCH reception occasions based on a first manner, wherein the resource location comprises: a time-domain location and/or a frequency-domain location,
wherein the first manner comprises at least one of the following:
determining based on implementation by the first terminal;
determining based on protocol agreement;
determining based on preconfigured information;
determining based on a broadcast signaling or a dedicated signaling transmitted by a network device to which the first terminal belongs;
determining based on indication information transmitted by a network device to which the first terminal belongs;
determining based on a resource location of first information, and an association relationship between the resource location of the first information and a resource location of each PSFCH reception occasion in one set of PSFCH reception occasions corresponding to the first information; or
determining a resource location of first information, an association relationship between the resource location of the first information and a resource location of a first PSFCH reception occasion in one set of PSFCH reception occasions corresponding to the first information, and an association relationship between resource locations of different PSFCH reception occasions in the one set of PSFCH reception occasions,
wherein the first information comprises a physical sidelink shared channel (PSSCH) and/or a physical sidelink control channel (PSCCH).

4. The method according to claim 1 or 2, further comprising:
transmitting one set of PSFCH reception occasions corresponding to a PSSCH and/or a PSCCH to a second terminal through a first signaling,
wherein the first signaling comprises at least one of the following:
sidelink control information (SCI);
a sidelink media access control control element (MAC CE); or
a PC5 radio resource control (RRC) signaling.

5. The method according to claim 4, wherein the first signaling is used to indicate at least one of the following:
a resource location of each PSFCH reception occasion in the one set of PSFCH reception occasions;
a resource location of a first PSFCH reception occasion in the one set of PSFCH reception occasions;
an association relationship between resource locations of different PSFCH receiving mechanisms in the one set of PSFCH reception occasions;
an association relationship between a resource location of first information and a resource location of each PSFCH reception occasion in one set of PSFCH reception occasions corresponding to the first information;
an association relationship between a resource location of first information and a resource location of a first PSFCH reception occasion of PSFCH reception occasions in one set of PSFCH reception occasions corresponding to the first information,
wherein the first information comprises a PSSCH and/or a PSCCH.

6. The method according to claim 4, wherein in a case that the first signaling comprises at least two of the SCI, the sidelink MAC CE, and the PC5 RRC signaling, dynamically varying information in resource location information of the one set of PSFCH reception occasions is transmitted by using the SCI, and semi-statically varying information or fixed information in the resource location information of the one set of PSFCH reception occasions is transmitted by using the sidelink MAC CE or the PC5 RRC signaling.

7. The method according to claim 4, wherein in a case that the first signaling comprises the sidelink MAC CE or the PC5 RRC signaling, the method further comprises:
encapsulating the first signaling and the PSSCH into one media access control protocol data unit (MAC PDU) for transmission.

8. The method according to claim 1 or 2, further comprising:
determining whether a PSCCH and/or a PSSCH of the first terminal corresponds to one PSFCH reception occasion or one set of PSFCH reception occasions based on a second manner,
wherein the second manner comprises at least one of the following:
determining based on implementation by the first terminal;
determining based on preconfigured information; or
determining based on a broadcast signaling or a dedicated signaling transmitted by a network device to which a first terminal belongs.

9. The method according to claim 8, further comprising:
transmitting first indication to a second terminal through sidelink interface control information,
wherein the first indication is used to indicate:
a PSCCH and/or a PSSCH corresponding to one PSFCH reception occasion; or
a PSCCH and/or a PSSCH corresponding to one set of PSFCH reception occasions.

10. The method according to claim 1 or 2, further comprising:
in a case that at least one PSFCH feedback is received in the one set of PSFCH reception occasions, if the at least one PSFCH feedback is an acknowledgement (ACK), determining the PSFCH feedback as the ACK; and if the at least one PSFCH feedback is a non-acknowledgement (NACK), determining the PSFCH feedback as the NACK.

11. A method for determining a number of DTXs, executed by a second terminal, comprising:
performing statistics on a number of consecutive discontinuous transmissions (DTXs) for a sidelink interface based on one set of physical sidelink feedback channel (PSFCH) reception occasions, wherein the one set of PSFCH reception occasions comprises at least two PSFCH reception occasions.

12. The method according to claim 11, wherein the performing statistics on the number of the consecutive discontinuous transmissions (DTXs) for the sidelink interface based on the one set of physical sidelink feedback channel (PSFCH) reception occasions comprises:
increasing a statistical value of the number of the consecutive DTXs by one, in a case that no PSFCH is received in any PSFCH reception occasion in the one set of PSFCH reception occasions; or
resetting a statistical value of the number of the consecutive DTXs to zero, in a case that a PSFCH is received in at least one PSFCH reception occasion in the one set of PSFCH reception occasions.

13. The method according to claim 11 or 12, further comprising:
determining a resource location of each PSFCH reception occasion in the one set of PSFCH reception occasions based on a third manner, wherein the resource location comprises: a time-domain location and/or a frequency-domain location; and
wherein the third manner comprises at least one of the following:
determining based on protocol agreement;
determining based on preconfigured information;
determining based on a first signaling transmitted by a first terminal through a sidelink interface, wherein the first signaling comprises at least one of the following: sidelink control information (SCI); a sidelink media access control control element (MAC CE); or a PC5 radio resource control (RRC) signaling;
determining based on a resource location of first information, and an association relationship between the resource location of the first information and a resource location of each PSFCH reception occasion in one set of PSFCH reception occasions corresponding to the first information; or
determining a resource location of first information, an association relationship between the resource location of the first information and a resource location of a first PSFCH reception occasion in one set of PSFCH reception occasions corresponding to the first information, and an association relationship between resource locations of different PSFCH reception occasions in the one set of PSFCH reception occasions,
wherein the first information comprises a physical sidelink shared channel (PSSCH) and/or a physical sidelink control channel (PSCCH).

14. The method according to claim 13, wherein the first signaling is used to indicate at least one of the following:
the resource location of each PSFCH reception occasion in the one set of PSFCH reception occasions;
the resource location of the first PSFCH reception occasion in the one set of PSFCH reception occasions;
an association relationship between resource locations of different PSFCH receiving mechanisms in the one set of PSFCH reception occasions;
an association relationship between the resource location of the first information and the resource location of each PSFCH reception occasion in one set of PSFCH reception occasions corresponding to the first information;
an association relationship between a resource location of first information and the resource location of the first PSFCH reception occasion of PSFCH reception occasions in one set of PSFCH reception occasions corresponding to the first information.

15. The method according to claim 13, wherein in a case that the first signaling comprises at least two of the SCI, the sidelink MAC CE, and the PC5 RRC signaling, dynamically varying information in resource location information of the one set of PSFCH reception occasions is transmitted by using the SCI, and semi-statically varying information or fixed information in the resource location information of the one set of PSFCH reception occasions is transmitted by using the sidelink MAC CE or the PC5 RRC signaling.

16. The method according to claim 11 or 12, further comprising:
determining whether a PSCCH and/or a PSSCH of a first terminal corresponds to one PSFCH reception occasion or one set of PSFCH reception occasions based on a fourth manner,
wherein the fourth manner comprises at least one of the following:
determining based on preconfigured information; or
determining based on a first indication transmitted by the first terminal through a sidelink interface.

17. The method according to claim 16, wherein the first indication is used to indicate:
a PSCCH and/or a PSSCH corresponding to one PSFCH reception occasion; or
a PSCCH and/or a PSSCH corresponding to one set of PSFCH reception occasions.

18. The method according to claim 11 or 12, further comprising:
in a case that a PSFCH transmission is successfully performed on a first PSFCH resource of PSFCH resources corresponding to the one set of PSFCH reception occasions, cancelling a PSFCH transmission on a second PSFCH resource or performing a PSFCH transmission on a second PSFCH resource,
wherein the second PSFCH resource is located after the first PSFCH resource in a time domain.

19. A terminal, wherein the terminal is a first terminal, and comprises: a memory, a transceiver and a processor,
wherein the memory is configured to store a computer program; the transceiver is configured to receive and transmit data under the control of the processor; and the processor is configured to read the computer program from the memory to perform the following operations:
performing statistics on a number of consecutive discontinuous transmissions (DTXs) for a sidelink interface based on one set of physical sidelink feedback channel (PSFCH) reception occasions, wherein the one set of PSFCH reception occasions comprises at least two PSFCH reception occasions.

20. The terminal according to claim 19, wherein the processor is further configured to read the computer program from the memory to perform the following operations:
increasing a statistical value of the number of the consecutive DTXs by one, in a case that no PSFCH is received in any PSFCH reception occasion in the one set of PSFCH reception occasions; or
resetting a statistical value of the number of the consecutive DTXs to zero, in a case that a PSFCH is received in at least one PSFCH reception occasion in the one set of PSFCH reception occasions.

21. The terminal according to claim 19 or 20, wherein the processor is further configured to read the computer program from the memory to perform the following operations:
determining a resource location of each PSFCH reception occasion in the one set of PSFCH reception occasions based on a first manner, wherein the resource location comprises: a time-domain location and/or a frequency-domain location,
wherein the first manner comprises at least one of the following:
determining based on implementation by the first terminal;
determining based on protocol agreement;
determining based on preconfigured information;
determining based on a broadcast signaling or a dedicated signaling transmitted by a network device to which the first terminal belongs;
determining based on indication information transmitted by a network device to which the first terminal belongs;
determining based on a resource location of first information, and an association relationship between the resource location of the first information and a resource location of each PSFCH reception occasion in one set of PSFCH reception occasions corresponding to the first information; or
determining a resource location of first information, an association relationship between the resource location of the first information and a resource location of a first PSFCH reception occasion in one set of PSFCH reception occasions corresponding to the first information, and an association relationship between resource locations of different PSFCH reception occasions in the one set of PSFCH reception occasions,
wherein the first information comprises a physical sidelink shared channel (PSSCH) and/or a physical sidelink control channel (PSCCH).

22. The terminal according to claim 19 or 20, wherein the processor is further configured to read the computer program from the memory to perform the following operations:
transmitting one set of PSFCH reception occasions corresponding to a PSSCH and/or a PSCCH to a second terminal through a first signaling,
wherein the first signaling comprises at least one of the following:
sidelink control information (SCI);
a sidelink media access control control element (MAC CE); or
a PC5 radio resource control (RRC) signaling.

23. The terminal according to claim 22, wherein the first signaling is used to indicate at least one of the following:
a resource location of each PSFCH reception occasion in the one set of PSFCH reception occasions;
a resource location of a first PSFCH reception occasion in the one set of PSFCH reception occasions;
an association relationship between resource locations of different PSFCH receiving mechanisms in the one set of PSFCH reception occasions;
an association relationship between a resource location of first information and a resource location of each PSFCH reception occasion in one set of PSFCH reception occasions corresponding to the first information;
an association relationship between a resource location of first information and a resource location of a first PSFCH reception occasion of PSFCH reception occasions in one set of PSFCH reception occasions corresponding to the first information,
wherein the first information comprises a PSSCH and/or a PSCCH.

24. The terminal according to claim 22, wherein in a case that the first signaling comprises at least two of the SCI, the sidelink MAC CE, and the PC5 RRC signaling, dynamically varying information in resource location information of the one set of PSFCH reception occasions is transmitted by using the SCI, and semi-statically varying information or fixed information in the resource location information of the one set of PSFCH reception occasions is transmitted by using the sidelink MAC CE or the PC5 RRC signaling.

25. The terminal according to claim 22, wherein the processor is further configured to read the computer program from the memory to perform the following operations:
in a case that the first signaling comprises the sidelink MAC CE or the PC5 RRC signaling, encapsulating the first signaling and the PSSCH into one media access control protocol data unit (MAC PDU) for transmission.

26. The terminal according to claim 19 or 20, wherein the processor is further configured to read the computer program from the memory to perform the following operations:
determining whether a PSCCH and/or a PSSCH of the first terminal corresponds to one PSFCH reception occasion or one set of PSFCH reception occasions based on a second manner,
wherein the second manner comprises at least one of the following:
determining based on implementation by the first terminal;
determining based on preconfigured information; or
determining based on a broadcast signaling or a dedicated signaling transmitted by a network device to which a first terminal belongs.

27. The terminal according to claim 26, wherein the processor is further configured to read the computer program from the memory to perform the following operations:
transmitting first indication to a second terminal through sidelink interface control information,
wherein the first indication is used to indicate:
a PSCCH and/or a PSSCH corresponding to one PSFCH reception occasion; or
a PSCCH and/or a PSSCH corresponding to one set of PSFCH reception occasions.

28. The terminal according to claim 19 or 20, wherein the processor is further configured to read the computer program from the memory to perform the following operations:
in a case that at least one PSFCH feedback is received in the one set of PSFCH reception occasions, if the at least one PSFCH feedback is an acknowledgement (ACK), determining the PSFCH feedback as the ACK; and if the at least one PSFCH feedback is a non-acknowledgement (NACK), determining the PSFCH feedback as the NACK.

29. A terminal, wherein the terminal is a second terminal, and comprises a memory, a transceiver and a processor,
wherein the memory is configured to store a computer program; the transceiver is configured to receive and transmit data under the control of the processor; and the processor is configured to read the computer program from the memory to perform the following operations:
performing statistics on a number of consecutive discontinuous transmissions (DTXs) for a sidelink interface based on one set of physical sidelink feedback channel (PSFCH) reception occasions, wherein the one set of PSFCH reception occasions comprises at least two PSFCH reception occasions.

30. The terminal according to claim 29, wherein the processor is further configured to read the computer program from the memory to perform the following operations:
increasing a statistical value of the number of the consecutive DTXs by one, in a case that no PSFCH is received in any PSFCH reception occasion in the one set of PSFCH reception occasions; or
resetting a statistical value of the number of the consecutive DTXs to zero, in a case that a PSFCH is received in at least one PSFCH reception occasion in the one set of PSFCH reception occasions.

31. The terminal according to claim 29 or 30, wherein the processor is further configured to read the computer program from the memory to perform the following operations:
determining a resource location of each PSFCH reception occasion in the one set of PSFCH reception occasions based on a third manner, wherein the resource location comprises: a time-domain location and/or a frequency-domain location; and
wherein the third manner comprises at least one of the following:
determining based on protocol agreement;
determining based on preconfigured information;
determining based on a first signaling transmitted by a first terminal through a sidelink interface, wherein the first signaling comprises at least one of the following: sidelink control information (SCI); a sidelink media access control control element (MAC CE); or a PC5 radio resource control (RRC) signaling;
determining based on a resource location of first information, and an association relationship between the resource location of the first information and a resource location of each PSFCH reception occasion in one set of PSFCH reception occasions corresponding to the first information; or
determining a resource location of first information, an association relationship between the resource location of the first information and a resource location of a first PSFCH reception occasion in one set of PSFCH reception occasions corresponding to the first information, and an association relationship between resource locations of different PSFCH reception occasions in the one set of PSFCH reception occasions,
wherein the first information comprises a physical sidelink shared channel (PSSCH) and/or a physical sidelink control channel (PSCCH).

32. The terminal according to claim 31, wherein the first signaling is used to indicate at least one of the following:
the resource location of each PSFCH reception occasion in the one set of PSFCH reception occasions;
the resource location of the first PSFCH reception occasion in the one set of PSFCH reception occasions;
an association relationship between resource locations of different PSFCH receiving mechanisms in the one set of PSFCH reception occasions;
an association relationship between the resource location of the first information and the resource location of each PSFCH reception occasion in one set of PSFCH reception occasions corresponding to the first information;
an association relationship between a resource location of first information and the resource location of the first PSFCH reception occasion of PSFCH reception occasions in one set of PSFCH reception occasions corresponding to the first information.

33. The terminal according to claim 31, wherein in a case that the first signaling comprises at least two of the SCI, the sidelink MAC CE, and the PC5 RRC signaling, dynamically varying information in resource location information of the one set of PSFCH reception occasions is transmitted by using the SCI, and semi-statically varying information or fixed information in the resource location information of the one set of PSFCH reception occasions is transmitted by using the sidelink MAC CE or the PC5 RRC signaling.

34. The terminal according to claim 29 or 30, wherein the processor is further configured to read the computer program from the memory to perform the following operations:
determining whether a PSCCH and/or a PSSCH of a first terminal corresponds to one PSFCH reception occasion or one set of PSFCH reception occasions based on a fourth manner,
wherein the fourth manner comprises at least one of the following:
determining based on preconfigured information; or
determining based on a first indication transmitted by the first terminal through a sidelink interface.

35. The terminal according to claim 34, wherein the first indication is used to indicate:
a PSCCH and/or a PSSCH corresponding to one PSFCH reception occasion; or
a PSCCH and/or a PSSCH corresponding to one set of PSFCH reception occasions.

36. The terminal according to claim 29 or 30, wherein the processor is further configured to read the computer program from the memory to perform the following operations:
in a case that a PSFCH transmission is successfully performed on a first PSFCH resource of PSFCH resources corresponding to the one set of PSFCH reception occasions, cancelling a PSFCH transmission on a second PSFCH resource or performing a PSFCH transmission on a second PSFCH resource,
wherein the second PSFCH resource is located after the first PSFCH resource in a time domain.

37. An apparatus for determining a number of DTXs, applied to a first terminal, comprising:
a first statistical unit, configured to perform statistics on a number of consecutive discontinuous transmissions (DTXs) for a sidelink interface based on one set of physical sidelink feedback channel (PSFCH) reception occasions, wherein the one set of PSFCH reception occasions comprises at least two PSFCH reception occasions.

38. The apparatus according to claim 37, wherein the first statistical unit is configured to:
increase a statistical value of the number of the consecutive DTXs by one, in a case that no PSFCH is received in any PSFCH reception occasion in the one set of PSFCH reception occasions; or
reset a statistical value of the number of the consecutive DTXs to zero, in a case that a PSFCH is received in at least one PSFCH reception occasion in the one set of PSFCH reception occasions.

39. The apparatus according to claim 37 or 38, further comprising:
a first determining unit, configured to determine a resource location of each PSFCH reception occasion in the one set of PSFCH reception occasions based on a first manner, wherein the resource location comprises: a time-domain location and/or a frequency-domain location; and
wherein the first manner comprises at least one of the following:
determining based on implementation by the first terminal;
determining based on protocol agreement;
determining based on preconfigured information;
determining based on a broadcast signaling or a dedicated signaling transmitted by a network device to which the first terminal belongs;
determining based on indication information transmitted by a network device to which the first terminal belongs;
determining based on a resource location of first information, and an association relationship between the resource location of the first information and a resource location of each PSFCH reception occasion in one set of PSFCH reception occasions corresponding to the first information; or
determining a resource location of first information, an association relationship between the resource location of the first information and a resource location of a first PSFCH reception occasion in one set of PSFCH reception occasions corresponding to the first information, and an association relationship between resource locations of different PSFCH reception occasions in the one set of PSFCH reception occasions,
wherein the first information comprises a physical sidelink shared channel (PSSCH) and/or a physical sidelink control channel (PSCCH).

40. The apparatus according to claim 37 or 38, further comprising:
a first transmitting unit, configured to transmit one set of PSFCH reception occasions corresponding to a PSSCH and/or a PSCCH to a second terminal through a first signaling,
wherein the first signaling comprises at least one of the following:
sidelink control information (SCI);
a sidelink media access control control element (MAC CE); or
a PC5 radio resource control (RRC) signaling.

41. The apparatus according to claim 40, wherein the first signaling is used to indicate at least one of the following:
a resource location of each PSFCH reception occasion in the one set of PSFCH reception occasions;
a resource location of a first PSFCH reception occasion in the one set of PSFCH reception occasions;
an association relationship between resource locations of different PSFCH receiving mechanisms in the one set of PSFCH reception occasions;
an association relationship between a resource location of first information and a resource location of each PSFCH reception occasion in one set of PSFCH reception occasions corresponding to the first information;
an association relationship between a resource location of first information and a resource location of a first PSFCH reception occasion of PSFCH reception occasions in one set of PSFCH reception occasions corresponding to the first information,
wherein the first information comprises a PSSCH and/or a PSCCH.

42. The apparatus according to claim 40, wherein in a case that the first signaling comprises at least two of the SCI, the sidelink MAC CE, and the PC5 RRC signaling, dynamically varying information in resource location information of the one set of PSFCH reception occasions is transmitted by using the SCI, and semi-statically varying information or fixed information in the resource location information of the one set of PSFCH reception occasions is transmitted by using the sidelink MAC CE or the PC5 RRC signaling.

43. The apparatus according to claim 40, wherein in a case that the first signaling comprises the sidelink MAC CE or the PC5 RRC signaling, the apparatus further comprises:
a first processing unit, configured to encapsulate the first signaling and the PSSCH into one media access control protocol data unit (MAC PDU) for transmission.

44. The apparatus according to claim 37 or 38, further comprising:
a second determining unit, configured to determine whether a PSCCH and/or a PSSCH of the first terminal corresponds to one PSFCH reception occasion or one set of PSFCH reception occasions based on a second manner,
wherein the second manner comprises at least one of the following:
determining based on implementation by the first terminal;
determining based on preconfigured information; or
determining based on a broadcast signaling or a dedicated signaling transmitted by a network device to which a first terminal belongs.

45. The apparatus according to claim 44, further comprising:
a second transmitting unit, configured to transmit first indication to a second terminal through sidelink interface control information,
wherein the first indication is used to indicate:
a PSCCH and/or a PSSCH corresponding to one PSFCH reception occasion; or
a PSCCH and/or a PSSCH corresponding to one set of PSFCH reception occasions.

46. The apparatus according to claim 37 or 38, further comprising:
a third determining unit, configured to: in a case that at least one PSFCH feedback is received in the one set of PSFCH reception occasions, if the at least one PSFCH feedback is an acknowledgement (ACK), determine the PSFCH feedback as the ACK; and if the at least one PSFCH feedback is a non-acknowledgement (NACK), determining the PSFCH feedback as the NACK.

47. An apparatus for determining a number of DTXs, applied to a second terminal, comprising:
a second statistical unit, configured to perform statistics on a number of consecutive discontinuous transmissions (DTXs) for a sidelink interface based on one set of physical sidelink feedback channel (PSFCH) reception occasions, wherein the one set of PSFCH reception occasions comprises at least two PSFCH reception occasions.

48. The apparatus according to claim 47, wherein the second statistical unit is configured to:
increase a statistical value of the number of the consecutive DTXs by one, in a case that no PSFCH is received in any PSFCH reception occasion in the one set of PSFCH reception occasions; or
reset a statistical value of the number of the consecutive DTXs to zero, in a case that a PSFCH is received in at least one PSFCH reception occasion in the one set of PSFCH reception occasions.

49. The apparatus according to claim 47 or 48, further comprising:
a fourth determining unit, configured to determine a resource location of each PSFCH reception occasion in the one set of PSFCH reception occasions based on a third manner, wherein the resource location comprises: a time-domain location and/or a frequency-domain location; and
wherein the third manner comprises at least one of the following:
determining based on protocol agreement;
determining based on preconfigured information;
determining based on a first signaling transmitted by a first terminal through a sidelink interface, wherein the first signaling comprises at least one of the following: sidelink control information (SCI); a sidelink media access control control element (MAC CE); or a PC5 radio resource control (RRC) signaling;
determining based on a resource location of first information, and an association relationship between the resource location of the first information and a resource location of each PSFCH reception occasion in one set of PSFCH reception occasions corresponding to the first information; or
determining a resource location of first information, an association relationship between the resource location of the first information and a resource location of a first PSFCH reception occasion in one set of PSFCH reception occasions corresponding to the first information, and an association relationship between resource locations of different PSFCH reception occasions in the one set of PSFCH reception occasions,
wherein the first information comprises a physical sidelink shared channel (PSSCH) and/or a physical sidelink control channel (PSCCH).

50. The apparatus according to claim 49, wherein the first signaling is used to indicate at least one of the following:
the resource location of each PSFCH reception occasion in the one set of PSFCH reception occasions;
the resource location of the first PSFCH reception occasion in the one set of PSFCH reception occasions;
an association relationship between resource locations of different PSFCH receiving mechanisms in the one set of PSFCH reception occasions;
an association relationship between the resource location of the first information and the resource location of each PSFCH reception occasion in one set of PSFCH reception occasions corresponding to the first information;
an association relationship between a resource location of first information and the resource location of the first PSFCH reception occasion of PSFCH reception occasions in one set of PSFCH reception occasions corresponding to the first information.

51. The apparatus according to claim 49, wherein in a case that the first signaling comprises at least two of the SCI, the sidelink MAC CE, and the PC5 RRC signaling, dynamically varying information in resource location information of the one set of PSFCH reception occasions is transmitted by using the SCI, and semi-statically varying information or fixed information in the resource location information of the one set of PSFCH reception occasions is transmitted by using the sidelink MAC CE or the PC5 RRC signaling.

52. The apparatus according to claim 47 or 48, further comprising:
a fifth determining unit, configured to determine whether a PSCCH and/or a PSSCH of a first terminal corresponds to one PSFCH reception occasion or one set of PSFCH reception occasions based on a fourth manner,
wherein the fourth manner comprises at least one of the following:
determining based on preconfigured information; or
determining based on a first indication transmitted by the first terminal through a sidelink interface.

53. The apparatus according to claim 52, wherein the first indication is used to indicate:
a PSCCH and/or a PSSCH corresponding to one PSFCH reception occasion; or
a PSCCH and/or a PSSCH corresponding to one set of PSFCH reception occasions.

54. The apparatus according to claim 47 or 48, further comprising:
a second processing unit, configured to: in a case that a PSFCH transmission is successfully performed on a first PSFCH resource of PSFCH resources corresponding to the one set of PSFCH reception occasions, cancel a PSFCH transmission on a second PSFCH resource or perform a PSFCH transmission on a second PSFCH resource,
wherein the second PSFCH resource is located after the first PSFCH resource in a time domain.

55. A processor readable storage medium, wherein the processor-readable storage medium stores a computer program, and the computer program is configured to cause a processor to perform steps of the method according to any one of claims 1 to 18.
